# EUROPEAN PATENT SPECIFICATION

(11) **EP 4 491 319 B1**
(45) Date of publication and mention of the grant of the patent: **02.12.2026**
(21) Application number: 24185094.0
(22) Date of filing: 27.06.2024
(51) Int. Cl.: B23K 26/082, B23K 26/08, B23K 26/12, B23K 26/70, F16P 1/00

(54) **AUTOMATION SYSTEM, AND METHOD FOR LASER OPERATION IN AN AUTOMATION SYSTEM FOR PROTECTED OPERATIONS**
AUTOMATISIERUNGSSYSTEM UND VERFAHREN ZUM LASERBETRIEB IN EINEM AUTOMATISIERUNGSSYSTEM FÜR GESCHÜTZTE OPERATIONEN
SYSTÈME D'AUTOMATISATION ET PROCÉDÉ DE FONCTIONNEMENT LASER DANS UN SYSTÈME D'AUTOMATISATION POUR DES OPÉRATIONS PROTÉGÉES

(30) Priority: 29.06.2023 US 202363511040 P
(43) Date of publication of application: 15.01.2025
(73) Proprietor: ATS Corporation, Cambridge, Ontario N3H 4R7 (CA)
(72) Inventor: BEAM, Daniel, Cambridge, Ontario, N3H 4R7 (CA); WALDEN, Evan, Cambridge, Ontario, N3H 4R7 (CA); KARPARVARFARD, Seyyedmohamadhasan, Cambridge, Ontario, N3H 4R7 (CA); DEGROOT, Geoff, Cambridge, Ontario, N3H 4R7 (CA); CHOW, Michael, Cambridge, Ontario, N3H 4R7 (CA); HOGAN, Roger, Cambridge, Ontario, N3H 4R7 (CA)
(74) Representative: Murgitroyd & Company

(56) References cited:
- CN-A- 1 154 640
- US-A- 4 205 216
- US-A1- 2015 273 641
- US-B2- 8 397 896
- ANONYMOUS: "First-in first-out chamber for successive articles", RESEARCH DISCLOSURE, KENNETH MASON PUBLICATIONS, HAMPSHIRE, UK, GB, vol. 299, no. 88, 1 March 1989 (1989-03-01), XP007113551, ISSN: 0374-4353

## Description

The present invention relates generally to protected/laser operations in automation systems and, more particularly, to a system and method for protected/laser operations that allows for continuous movement of workpieces through a protected/laser station while maintaining safety requirements, see claims 1 and 9.

### BACKGROUND

In automation systems in manufacturing environments there is often a need for operations on workpieces that can have some risk of harm to people in the area. These can be considered protected operations. One particular example of protected operation is laser operations on workpieces, for example, heating, cutting, treating, marking of parts, products, materials or the like (generally referred to as "workpieces" herein). Laser operations can be used for various different actions on a workpiece. As an example, laser marking can be used for placing part numbers, product labels, product names, and many other purposes. In typical automation systems, a workpiece is moved, typically by some form of conveyor or the like, through a series of stations where various operations are performed. Laser operations can be performed at one or more of these stations during processing of a workpiece.

The use of lasers and, in particular, industrial lasers, typically involves various safety requirements to prevent harm to people near the lasers from laser emissions. Safety requirements can include: the use of protective goggles, full or partial enclosure of the laser with absorbing housing materials, interlocks that switch off lasers if a protective box is opened, signs and confinement measures preventing people from entering laser use areas, among others. Laser safety requirements continue to develop as more and more lasers are used in automation systems.

In modern automation systems, the conventional approach to protected/laser operations is to use an enclosure and interlocks such that the operation/laser won't operate unless the enclosure is closed. For the most safety, the enclosure is generally designed to reduce or prevent risk, for example, as much laser emissions/light, if any at all, from leaving the enclosure.

In order to conduct laser operations on a workpiece, the typical approach is for the workpiece to be moved into a laser enclosure, the enclosure is closed, the laser operates, the enclosure is opened, and the workpiece exits the enclosure. As automation systems become faster and faster, the laser operation station can become a bottleneck to throughput. As such, some automation systems may use multiple enclosures and lasers or multiple lasers in a larger enclosure to increase throughput. However, automation systems with multiple lasers, laser stations, or the like tend to be more complex and costly and require a predetermined cycle time during which the workpieces are stopped while the laser operates.

US4205216A (disclosing the preamble of claim 1) relates to a laser welding system having a housing formed with an opening through which workpieces may be passed, and a laser for generating and directing a laser beam into a welding station within the housing. The system further includes a light trap for inhibiting light from passing from the welding station through the housing opening to the exterior to the housing and a conveyor for conveying workpieces between workpieces loading and unloading stations located exteriorly of the housing and the welding station through the housing opening and the light trap. A method of laser welding a succession of workpieces is also disclosed comprising the steps of successively loading workpieces onto a conveyor at a loading station and conveying the workpieces through a light trap to a welding station located within a housing. The workpieces are illuminated with laser radiation at the welding station and then conveyed through a light trap out of the housing to an unloading station where they are unloaded.

CN1154640A discloses a transportation device capable of preventing microwave from leaking. It includes a microwave absorbing body or archipelago suppressing plate, and is characterized by that it possesses a rotating gate type leak-proofing device which is composed of rotating gate and matched enclosing wall partitioned by material feeding channel and discharge channel. The above-mentioned microwave absorbing body or archipelago suppressing plate is placed on the described enclosing wall. The above-mentioned rotating gate is made of high conductive material.

Therefore, there is a need for an improved system and method for laser operations in an automation system that overcomes at least some of the issues with conventional laser operation systems and methods.

### SUMMARY

According to an aspect of the present invention, there is provided an automation system according to claim 1, the system including inter alia a linear motor conveyor, one or more workpieces carried by the linear motor conveyor, and a laser operation system, the laser operation system including: a laser; one or more stationary shield elements forming an enclosure for the laser, with an inlet and an outlet, and positioned such that a work piece of the one or more workpieces on the linear motor conveyor can enter the inlet and exit the outlet; and one or more moving shield elements that move with the one or more workpieces as the workpieces are moved in continuous motion by the linear motor conveyor into laser emissions from the laser, wherein the linear motor conveyor synchronizes the independent movement of the one or more workpieces with the movement of the moving shield elements, wherein the one or more moving shield elements are configured to comprise an end piece to provide extended or flexible contact with the stationary shield elements while also allowing movement to reduce exfiltration of laser emissions from the inlet or outlet while the one or more workpieces are moving through the enclosure.

In some cases, the movement of the one or more moving shield elements may be non-reversing.

In some cases, the laser operation system may further include a wheel supporting the one or more moving shield elements such that the movement of the one or more moving shield elements is rotational.

In some cases, the speed of the movement of the one or more moving shield elements can be adapted to the movement of the one or more workpieces on the conveyor.

In some cases, the one or more moving shield elements can co-operate with the enclosure to create: a temporary first chamber adjacent the inlet; a temporary second chamber adjacent the outlet; and an interior space between the first and second chambers in which the laser emissions reach the one or more workpieces.

In some cases, the one or more moving shield elements may be configured to extend when needed to reduce exfiltration and to contract when not needed to reduce exfiltration.

In some cases, the one or more workpieces may be carried by a pallet of the conveyor, wherein the pallet and workpiece enter the inlet and exit the outlet. In this case, the pallet, inlet and outlet may be configured to reduce exfiltration of laser emissions from the enclosure. In particular, the pallet may include a gooseneck to reduce exfiltration of laser emissions and the inlet and outlet may be configured to conform to the gooseneck.

In some cases, the one or more moving shield elements may be moved by the conveyor carrying the one or more workpieces or by a moving element of the conveyor carrying the one or more workpieces.

According to another aspect of the present invention, there is provided a method for laser operation in an automation system according to claim 9, the automation system including one or more workpieces carried by a linear motor conveyor, the method including: moving a workpiece toward an inlet of a laser operation station via the linear motor conveyor; moving at least one shield element with the workpiece to enclose the workpiece in a first area as the workpiece enters the inlet, wherein the linear motor conveyor synchronizes the movement of the workpiece with the movement of the at least one shield element; moving the first area with the workpiece such that the first area remains closed to the inlet but the workpiece moves into an interior space of the laser operation station, wherein the linear motor conveyor synchronizes the movement of the workpiece with the movement of the first area; performing a laser operation on the workpiece in the interior space as the workpiece moves continuously via the linear motor conveyor in synchronization with the laser operation; moving at least one other shield element with the workpiece to enclose the workpiece in a second area that is different from the first area as the workpiece moves from the interior space toward the outlet, wherein the linear motor conveyor synchronizes the movement of the workpiece with the movement of the second area; moving the second area with the workpiece such that the second area remains closed to the interior space but the workpiece moves through the outlet, wherein the linear motor conveyor synchronizes the movement of the workpiece with the movement of the second area; and moving the workpiece out of the outlet, via the linear motor conveyor.

In some cases, the movement of the at least one shield element may be non-reversing.

In some cases, the movement of the at least one shield element may be rotational.

In some cases, the speed of the movement of the at least one shield element may be adapted to the movement of the one or more workpieces on the conveyor.

In some cases, the at least one shield element may be configured to extend when needed to reduce exfiltration and to contract when not needed to reduce exfiltration.

In some cases, the method may further comprise transporting the one or more workpieces on pallets of the conveyor, wherein each pallet may include a gooseneck to reduce exfiltration of laser emissions, and wherein the inlet and outlet conform to the gooseneck.

Other aspects and features of the present invention will become apparent to those ordinarily skilled in the art upon review of the following description of specific embodiments in conjunction with the accompanying figures.

### BRIEF DESCRIPTION OF THE FIGURES

Embodiments of the present invention will now be described, by way of example only, with reference to the attached Figures.
Fig. 1 is a schematic diagram of an example of a linear motor conveyor system;
Fig. 2 is a schematic diagram of an example automation system including a linear motor conveyor system and various automation stations;
Fig. 3 is a block diagram illustrating an embodiment of a system for managing an automation system;
Fig. 4 is a block diagram illustrating an embodiment of a control structure for a linear motor conveyor system;
Fig. 5A is a perspective view an embodiment of a linear motor track section with moving element;
Fig. 5B is a perspective open view of the linear motor track section of Fig. 5A;
Fig. 6 is a block diagram of an embodiment of a control architecture for a linear motor conveyor system;
Fig. 7 is a perspective front view of an embodiment of a laser operation system illustrating the interior thereof;
Fig. 8 is a front view of the laser operation system of Fig. 7 also illustrating the interior thereof;
Fig. 9 is a side sectional view of the laser operation system of Fig. 7;
Fig. 10 is a perspective view of an embodiment of a moving element and associated pallet for use with the laser operation system of Fig. 7;
Fig. 11 is a side view of the moving element and associated pallet of Fig. 10;
Fig. 12 is a perspective front view of another embodiment of a laser operation system illustrating an interior thereof;
Fig. 13 is a front view of the laser operation system of Fig. 12 also illustrating the interior thereof;
Fig. 14 is a top view of the laser operation system of Fig. 12 also illustrating the interior thereof;
Fig. 15 is a side sectional view of the laser operation system of Fig. 12;
Fig. 16 is another side sectional view of the laser operation system of Fig. 12 showing a moving element and pallet;
Fig. 17 is a perspective view of another embodiment of a moving element and associated pallet for use with the laser operation system of Fig. 12;
Fig. 18 is a side view of the moving element and associated pallet of Fig. 17;
Figs. 19A-G illustrate operation of the laser operation system of Fig. 12;
Fig. 20A is a perspective front view of another embodiment of a laser operation system illustrating an interior thereof;
Fig. 20B is a front view of the laser operation system of Fig. 20A, also illustrating the interior thereof;
Fig. 21A is a perspective view of an alternate structure for use with the enclosure as described above;
Fig. 21B is a side sectional view of the alternate structure of Fig. 21A;
Fig. 22 is a schematic front view of another embodiment of the laser operation system using baffles on a conveyor;
Fig. 23 is a front view of another embodiment of the laser operation system using a worm gear for baffles; and
Fig. 24 is a flowchart illustrating an embodiment of a method of operating a laser operation system.

### DETAILED DESCRIPTION

Generally, the present invention provides an automation system comprising a protective system and a method for an automation system including one or more workpieces carried by a conveyor, the protective operation system including: a protected area; one or more stationary shield elements forming an enclosure for the protected area, with an inlet and an outlet, and positioned such that a work piece on the conveyor can enter the inlet and exit the outlet; and one or more moving shield elements that move in synchronization with the one or more workpieces as the workpieces are moved in continuous motion by the conveyor into the protected area, wherein the one or more moving shield elements are configured to prevent access to/from the protected area via the inlet or outlet while the one or more workpieces are moving through the enclosure.

More specifically, the present invention provides an automation system with a protective system and a method for laser operations in an automation system. In this case, the protected area is the area where laser operations occur. Embodiments of the laser operations system described herein are intended to allow continuous processing of workpieces as they move through a laser operations station because the laser operations station is configured to prevent or limit the amount of laser light/emissions that can potentially exit or exfiltrate from an enclosure. In some cases, the risk involved in any emissions exiting the enclosure will depend on the number of reflections made by the light in the path to any potential exit. Embodiments herein are also intended to have a relatively compact size in order to limit the footprint of the enclosure within the automation system.

Embodiments herein will make reference to an automation system that includes a linear motor conveyor for moving workpieces around the automation system. However, it will be understood that other types of conveyors may be configured and used in a similar way with appropriate modification of the laser operations station.

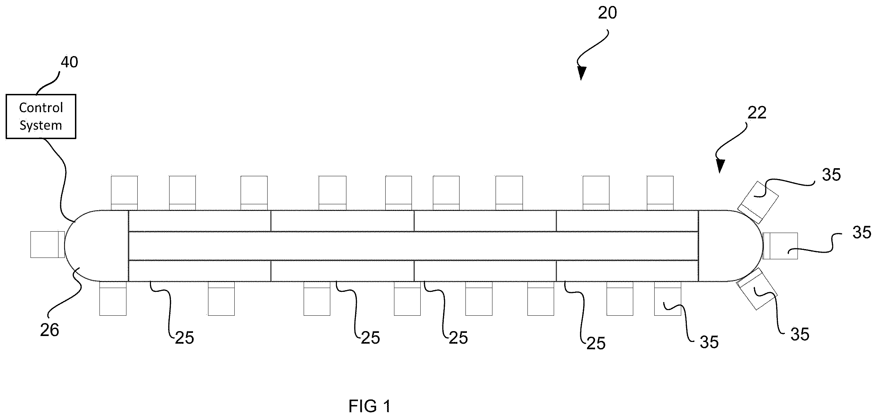

Figure 1 shows a schematic diagram of an example conveyor system 20. The conveyor system 20 includes a track 22 made up of one or more track sections 25, 26 defining the track 22. In Fig. 1, a plurality of straight track sections 25 are provided with two curved sections 26. A plurality of moving elements 35 are provided to the track and move around on the conveyor system 20. The moving elements 35 may support directly or include or support a pallet which may support a part, product, workpiece or the like (called a "workpiece"). Herein, the terms "moving element" and "pallet" may sometimes be used interchangeably, depending on the context.

It will be understood that the modular nature of the track sections allow for various combinations of track sections to provide various sizes and shapes of conveyor systems and any appropriate number of moving elements. In Fig. 1, the corner (or curved) track sections 26 are 180 degree turns but, in some configurations, the curved track sections 26 may have different angles such as 45, 90, 135 degree angles or the like. As noted above, the particular conveyor system illustrated is a linear motor conveyor system and some of the principles of operation of a particular type of linear motor conveyor system are described in more detail in, for example, U.S. Patent No. 8,397,896 to Kleinikkink et al., which is hereby incorporated herein by reference.

As noted, the conveyor system 20 may include a plurality of track sections 25, 26, which are self-contained and separable from one another so as to be modular in nature. In order to be modular, each track section 25, 26 may house electronic circuitry and/or mechanical parts for powering and controlling the related track section 25, 26 and/or there may be a controller/control system 40 that controls the related track section or the track 22 overall (only one controller is shown but other controllers for track sections may be included as well). As described further below, in some cases, a track controller may communicate or interface with track section controllers provided for each of the track sections 25, 26. The controller(s) may include a processor that executes a program stored on a machine-readable medium. The machine-readable medium may be a part of the controller or at a remote location or the like.

In linear motor conveyor systems, such as the linear motor conveyor system 20 shown in Fig. 1, the track 22 produces a magnetic force for moving the moving element 35 along the track 22. The magnetic force can also support or help support the moving element 35 on the track 22. The magnetic force is at least partly generated by the interaction of the magnetic flux created by magnetic elements (for example, embedded coils) of the track 22 and magnetic elements (for example, magnets) of the moving element 35.

In addition to the conveyor system, such as that shown in Fig. 1, a full manufacturing/automation system will also include automation stations, which are typically arranged adjacent to the conveyor system and are used to handle manufacturing operations on workpiecess moving along the conveyor system. An automation station may include a single piece of equipment/machine in a production line, such as a press, pick & place device or the like, but may also include a complex system involving robots, manipulators, and the like. In some cases, automation stations/equipment may require an element on the moving element to move, grip, or otherwise actuate in some manner.

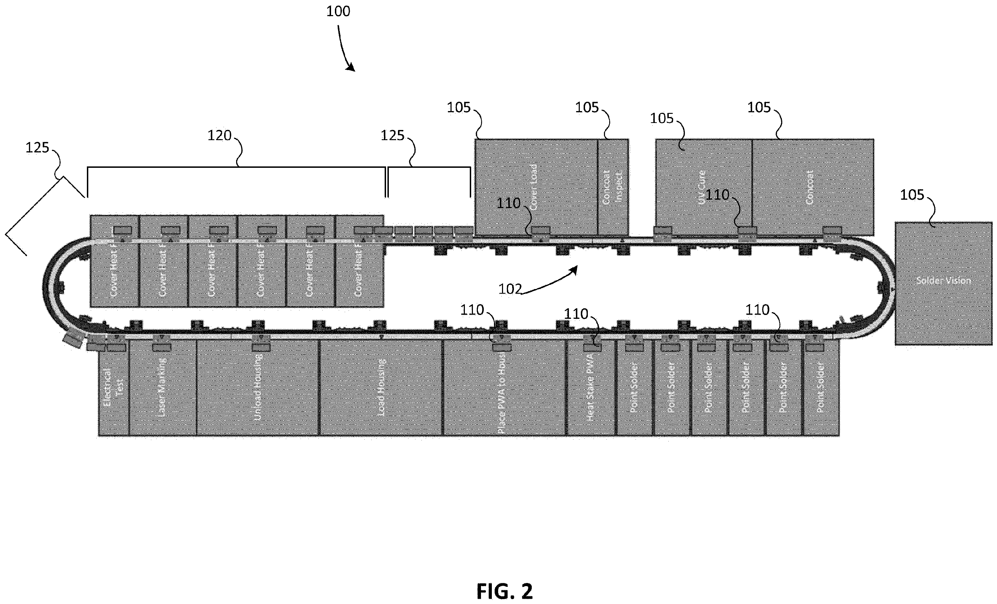

Figure 2 shows an example configuration of an automation system 100, including a conveyor system 102 and at least one automation station 105. In this case, the conveyor system 102 is a linear motor conveyor system including a track providing a linear motor that drives moving elements along the track using magnetic fields such as that described above with regard to Fig. 1. At least one automation station, or automation element, 105 (which in the current example includes 23 automation stations 105) may be or include, for example, machines, sensors, servos, devices, or equipment, or a combination of machines, devices, or equipment, or the like. Each automation station will perform an operation or operations on a workpiece as it moves through the automation system via the conveyor system.

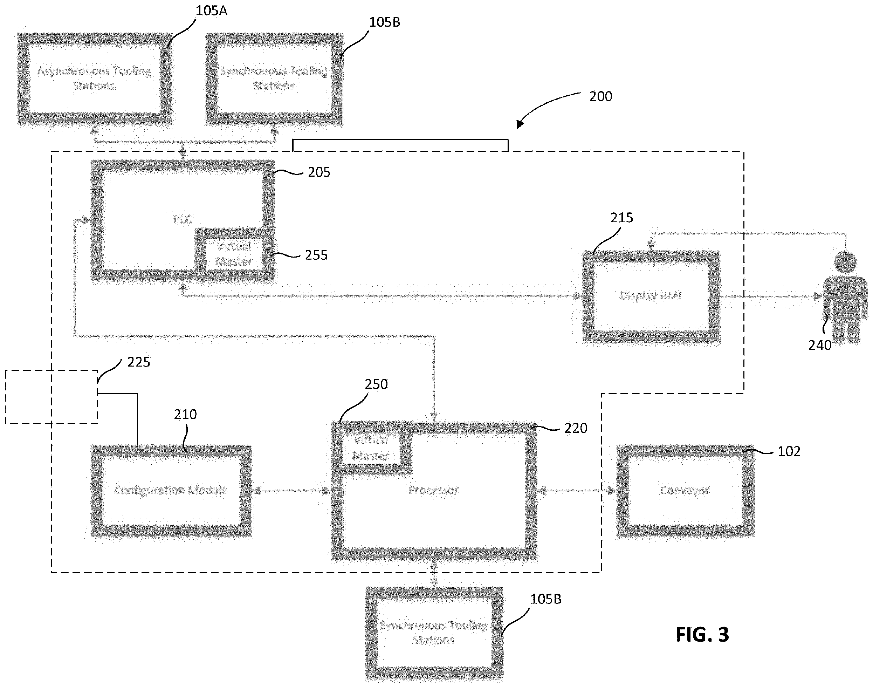

Similar to the description above, the conveyor 102 includes moving elements 110 that are configured to travel on the conveyor 102 and typically stopping at one or more automation stations 105 in order to have the automation station operation/function applied to a workpiece being carried by the moving element 110. In some cases, there may further be loading or unloading stations where the workpieces are placed on or removed from the moving elements. Some of the automation stations 105 will operate in an asynchronous mode or be in an asynchronous area, in which, a moving element 110 will stop at an automation station 105 and the station will operate on a workpiece on the moving element or the like. Generally, in an asynchronous mode, the conveyor system and automation stations 105 can accommodate variable cycle times and loading. However, in some areas, the conveyor system 102 and automation stations 105 may operate in a synchronization mode or synchronization area (indicated as synchronization area 120), in order to achieve higher speed throughput for automation stations that may be controlled by software or mechanical methods to work synchronously. For example, the automation station may be cammed either mechanically or via software - to repeat an action in a predefined manner continuously. These synchronous automation stations would generally have fixed cycle times, which requires synchronization, for example, by following a master signal (which may be a software signal or the like as described in further detail in the description of Fig. 3). Similarly, moving elements 110 could be configured to follow a predefined motion profile, within the synchronous area 120, based on the master signal. In automation systems 100 where not all automation stations 105 are synchronized in some way, transitioning between an asynchronous area and a synchronous area 120 can sometimes require a merging zone 125. The merging zone 125 can be used to adjust/align/synchronize a moving element 110 to the software master signal so that the moving element can begin a motion profile sequence at the appropriate timing for entering the synchronous area 120.

Figure 3 illustrates a system 200 for controlling automation systems. As noted above, the automation system 100 that is managed by the system 200 may include a conveyor 102 and a plurality of automation stations 105 and, further, the automation stations 105 may be in asynchronous areas/zones (automation stations 105A) or synchronous areas/zones (automation stations 105B). The system 200 includes one or more programmable logic controllers (PLC) 205 (which are typically associated with an automation station or a track section and control the elements of the automation station or of the track section), a configuration module 210, a display/interface 215, and at least one processor 220. The configuration module 210 may include a connection to an internal or external data source, such as a database 225 or the like.

The PLC 210 and the processor 220 can be configured to allow input of and/or receive data related to various parameters related to the automation system. For example, there may be a display/interface (human machine interface (HMI)) 215 for a user 240 to input data related to the automation system, including the conveyor and the automation stations. In some cases, there may be access to one or more outside data sources 225, via, for example the configuration module 210, for data from third party data sources, for automation station/equipment parameters and the like. The configuration module 210 may obtain various parameters from the database 225 such as, for example, previously saved data relating to known or previously input automation system elements or the like. The input or received data may be stored in the database 225 or the like. As will be understood, the database 225 may be distributed across one or several memories and may be accessed via a network or the like.

The configuration module 210 is configured to review the input data to determine the parameters related to configuration of the automation system. The configuration module 210 takes input data, for example, relating to manufacturer, product name/number, functionality, or the like and prepares a configuration of the automation system that can account for synchronization details such as communication protocol conversion, latency times, and the like. The configuration module 210 may also allow for further input and adjustments to be made by, for example, a user or users 240. Generally, the configuration module 210 is configured to review the input data and configuration parameters and make adjustments so that the automation stations and conveyor can be in communication and synchronously controlled (i.e. move in a synchronous manner under the control of a master signal) in synchronous zones/areas.

The display/interface 215 provides output information to the end user 240. The processor 220 processes data from the PLC 205 and provides processing power to the configuration module 210 for performing embodiments of the method of managing automation systems described herein. The processor 220 also provides output to the display.

Each of the PLC 205 and the processor 220 may include a master control to provide the master control signal used in synchronous areas. The master control may be in hardware or software (virtual). In this example, the processor 220 includes a virtual software processor master 250. The PLC 205 may also have a PLC virtual master 255, which can be used in the event of external master control (where the master control will 'propagate' a master control signal/information to the processor. In some cases, the PLC will set and control the virtual master in the processor. The PLC will also generally control asynchronous areas and the asynchronous automation stations 105A. In the event of external master control, the PLC can control synchronized areas and synchronized automation stations 105B, otherwise the processor can control the synchronized areas and synchronized automation stations 105B. The configuration module 220 may be further enhanced via machine leaming, artificial intelligence or the like based on results from previous configurations.

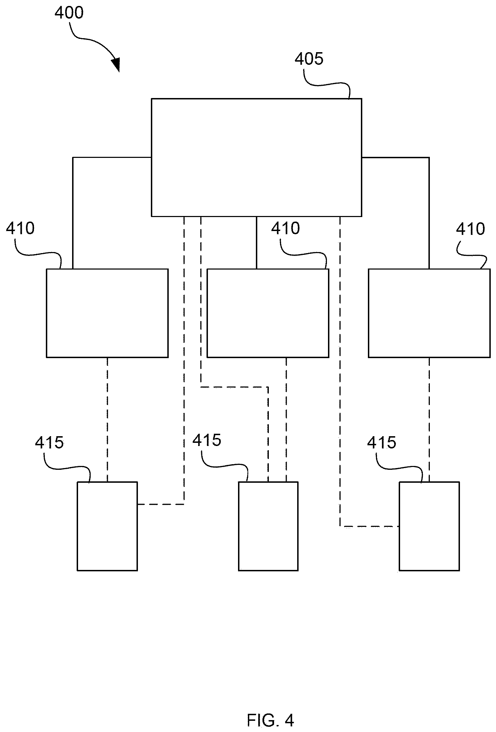

FIG. 4 is a block diagram of an example embodiment of a control system 400 for a modular linear motor conveyor system 20 such as that shown in Fig. 1 or Fig. 2. As shown in FIG. 1, the conveyor system 20 includes a controller 40. The controller 40 may be considered to be part of or be the control system 400 shown in Fig. 4 and the control system 400 is intended to be an example embodiment of a controller for a linear motor conveyor system. In some cases, the control system 400 may include a central controller 405 that controls the overall conveyor system 20. The conveyor system may also include a plurality of track section controllers 410, for example, one for each of the track sections 25, 26. Either the central controller 405 or the track section controller 410 may also control the operation of a sidecar or actuation mechanism 415 provided on the moving element (described further below). There may be control signals in both directions between the controllers. It will be understood that, in some cases, the movement of the moving element may be controlled to work in relation to or in synchronization with the operation of automation stations for coordinated operations or the like.

In some embodiments, the track section controllers 410 may be connected to one another in a peer-to-peer communications network such that, for example, each section controller 410 may be connected to preceding and following section controllers 410 through a communications link or the like, rather than each section controller being connected to the central controller. Some alternative embodiments may include use of the central controller 405 to convey information/data between/among section controllers 410 and/or sidecar/actuation mechanisms 415 or the like.

The various controllers may be connected via, for example, input/output (I/O) or network modules or the like. In some cases, the controllers can also communicate in a wireless manner.

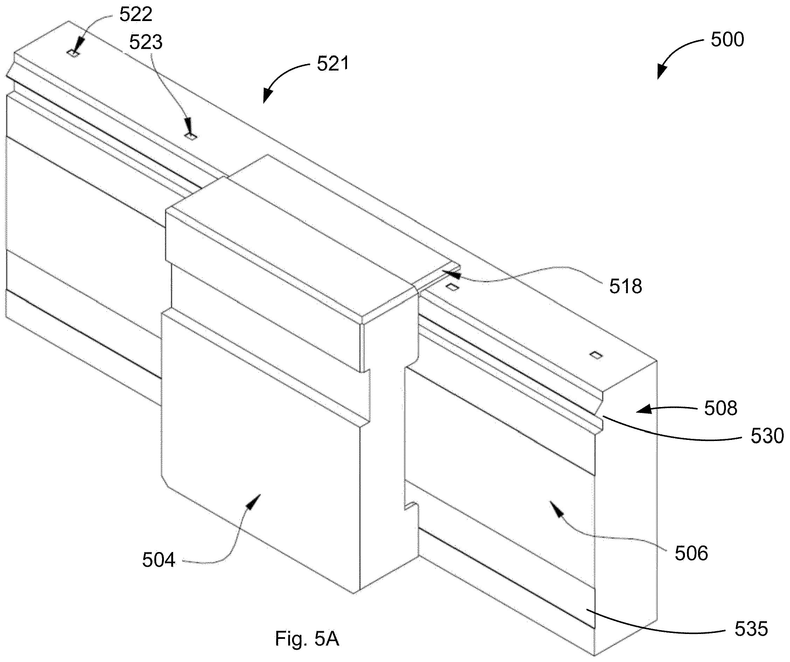

Fig. 5A is a perspective view of an embodiment of a track section 500 such as that of the linear motor conveyor system of Figs 1 or 2. The track section 500 features one or more moving elements 504 (only one is illustrated) which are configured to ride or travel along a track portion 506 of the track section 500. The track 506 includes a frame 508 configured to support the moving element 504.

Each track section 500 can be self-contained and quickly and easily separable from one another so as to be modular in nature. In this modular example, the track sections 500 are mounted on a support (not shown) so as to align and abut one another in order to form a longer track. In order to be modular, each track section 500 can house self-contained electronic circuitry for powering and controlling the track section 500 and/or the moving element 504.

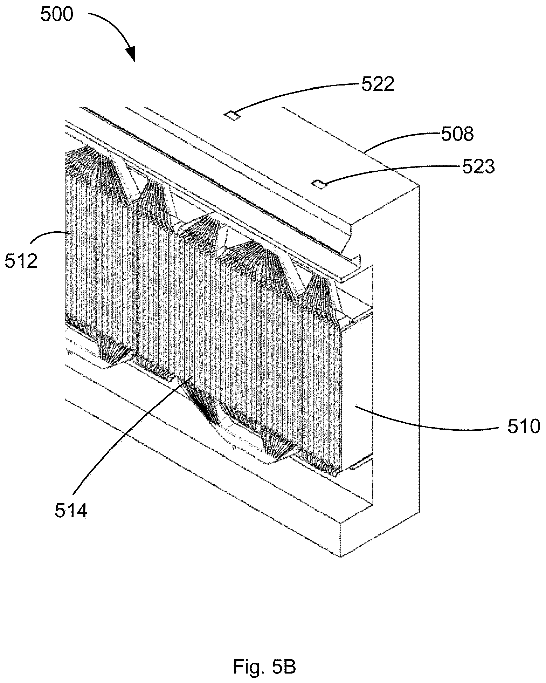

Figure 5B illustrates a perspective open view of the track section 500. The track section 500 includes the frame 508 housing a linear drive mechanism 510. The linear drive mechanism 510 is formed as a stator armature 512 and a plurality of embedded coils 514. The embedded coils 514 can be individually excited so that an electrically-induced magnetic flux produced by the stator armature 512 can be generated adjacent to a given moving element 504 to be controlled, in a direction normal thereto, without affecting adjacent moving elements 504. The motive force for translating each moving element 504 arises from the magnetomotive (MMF) force produced by magnetic elements (described below), such as permanent magnets, provided to each moving element 504 and the stator armature 512, i.e., by the tendency of the corresponding magnetic fluxes provided by the stator armature 512 and moving element 504 to align. A controller (such as those described above) enables separate and independent moving MMFs to be produced along the length of the track section 500 for each moving element 504 so that each moving element 504 can be individually controlled with a trajectory profile that is generally independent of any other moving element 504.

Referring again to Figure 5A, in this particular embodiment, each moving element 504 includes an extension 518 provided with a machine-readable medium (not shown), which may be, for example, a magnetic strip, an optically transmissive or reflective strip, other type of feedback system or the like. The extension 518 is configured such that the machine-readable medium interacts with sensors 522, 523 provided to the frame 508. The sensors 522, 523 are configured to read the machine-readable medium, whether magnetically, optically, or otherwise. The machine readable medium and sensors 522, 523 form a position sensing system 521.

Further, each track section can include at least one rail to support/guide the moving element 504, in this case, a first guide rail 530 and a second guide rail 535. In a particular case, the first guide rail 530 may have a "V" shaped profile while the second guide rail 535 may have a flat surface. It will be understood that rail(s) having an alternate shape may be used with corresponding wheels or bearings on the moving elements.

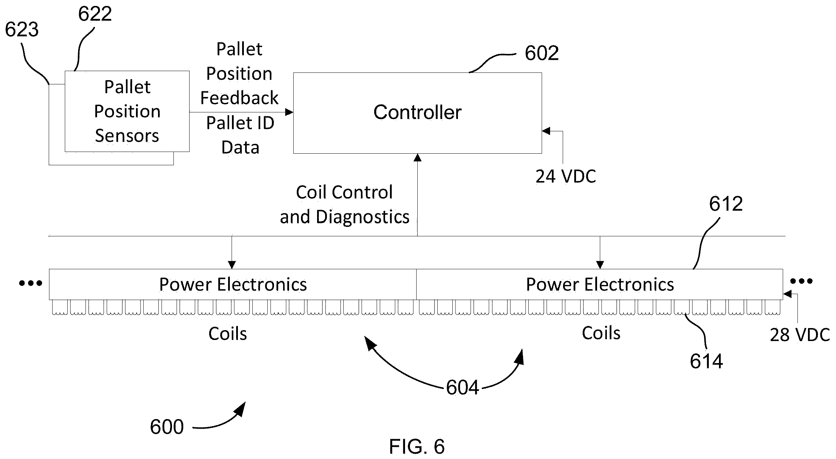

Figure 6 is a block diagram of an example control architecture 600 employed in a linear motor conveyor system such as that in Fig. 1 or 2. In this embodiment, a controller 602 controls the conveyor system and the track sections 604 (two are illustrated). The controller 602 is configured to monitor the position of and control the movement of moving elements (not shown) based on the position. The controller 602 may also monitor and report moving element identification data so the moving element can be tracked throughout the conveyor system. As such, the controller 602 may be used for process (i.e. manufacturing-line) control. The controller 602 may also provide a supervisory diagnostic role by monitoring the track sections 604 (e.g., by engaging in a continuous polling or pushing process) in order to determine the current status of any track section 604 and whether any track section 604 has failed. It will be understood that, in some cases, there may be additional controllers 602 and each may directly control each of the track sections 604.

The controller 602 may also be connected to other devices, such as programmable logic controllers (PLCs) (not shown) via input/output (I/O) or network modules. The PLCs may provide manufacturing-line station-processing instructions to the track section 604, such as directing the next destination for a moving element along the track, providing station-specific motion instructions in respect of a given moving element, or the like.

As illustrated, the controller 602 can be connected to a stator armature 612 and coils 614 in the track sections 604 and controls the coils 614 in accordance with an independent trajectory or "move" command for each moving element located thereon.

The controller 602 may also be connected to sensors 622, 623 situated in the track section 604. The controller 602 can be configured to implement a closed-loop digital servo control system that controls movement of the moving element by resolving the real-time position of each moving element located in the track section(s) 604. The controller 602 makes use of the sensors 622, 623, which can supply moving element identification data and moving element position data to the controller 602.

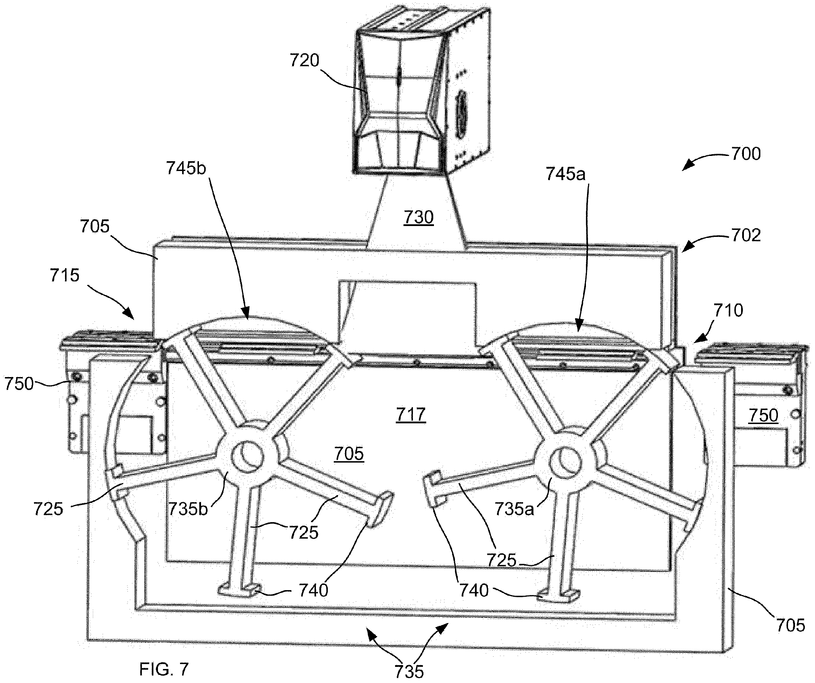

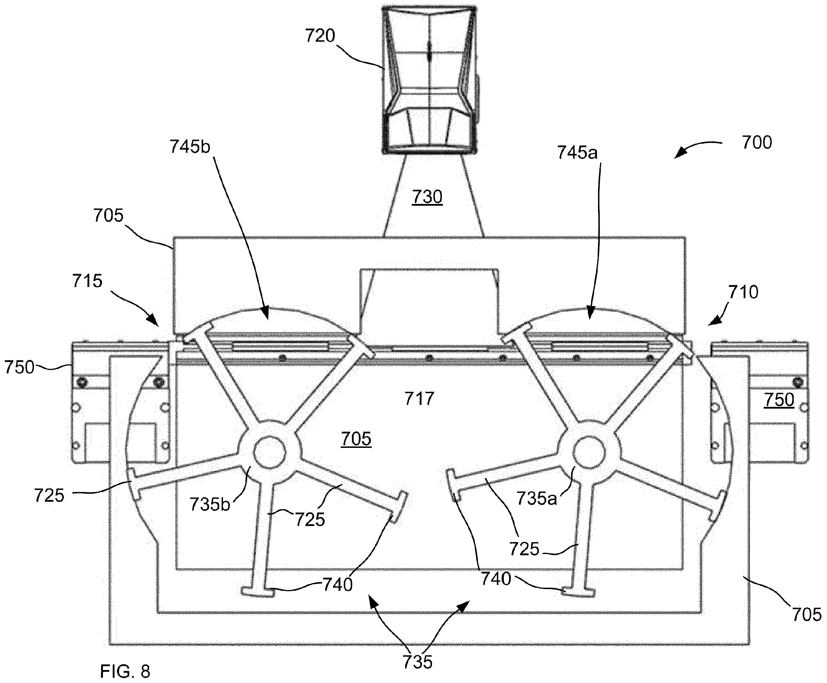

Having described the automation system more generally, Fig. 7 is a perspective front view of an embodiment of a laser operation system 700 that can be configured as an automation station in an automation system the same as or similar to that described above. Fig. 8 is a front view of the laser operation system of Fig. 7 also illustrating the interior thereof. In Figs. 7 and 8, the laser operation system 700 is shown in a cut-away view illustrating an interior thereof. The laser operation station 700 includes an enclosure 702 formed of one or more stationary shield elements 705. The enclosure has an inlet 710 and an outlet 715, with the enclosure 702 generally defining an interior space 717. As will be understood, the inlet 710 and outlet 715 can also serve the opposite function depending on a direction of movement. The laser operation system 700 also includes a laser 720 configured to conduct a laser operation within the laser operation station 700. The laser operation station 700 also includes moving shield elements 725 configured to control the exfiltration of laser emissions (laser light) (illustrated as 730) from the interior space 717 of the enclosure 702. Figs. 7 and 8 also show moving elements 750 of a conveyor system similar to that described above. The moving elements 750 will be described in further detail below.

In Figs. 7 and 8, the laser 720 is mounted above the interior space 717 in the laser operation station 700. It will be understood that the laser 720 may be mounted in different configurations, including on a front, back, angled or the like, in relation to the interior space 717. Further, the laser 720 will generally be mounted within the enclosure but some walls of the enclosure are not shown in order to illustrate the interior elements. Still further, the laser may include a plurality of lasers depending on the operation to be performed, size of the system, or various other factors.

In the embodiment of Figs. 7 and 8, the moving shield elements (sometimes called baffles) 725 are configured as extensions/spokes extending from two rotating wheels 735, which are associated with each of the inlet 710 and the outlet 715. The rotating wheels 735 rotate in synchronization with the movement of the moving elements 750 (and the parts they carry) to block laser emissions 730 from exiting the interior space 717 of the enclosure as described further herein. In some embodiments, the moving shield elements may be moved by the moving elements via contact between the moving elements and the moving shield elements or via a cam or other mechanical system.

Each of the moving shield elements 725 includes end piece 740, configured to provide extended or flexible contact with the fixed shield elements of the enclosure 702. The end pieces may be configured as rollers, flexible materials, or the like with the intention of providing a seal against laser emissions while also allowing movement.

As shown in Figs. 7 and 8 and explained further herein, the enclosure 702 can include interior stationary shield elements/walls shaped to allow a close contact to the moving shield elements 725 having the end pieces 740 as the moving shield elements 725 move within the enclosure 702. In Fig. 7, a combination of two adjacent moving shield elements 725 on a first rotating wheel 735a are configured to interact with interior walls of the enclosure to form a first area/chamber 745a adjacent the inlet 710 and a combination of two adjacent moving shield elements 725 on a second rotating wheel 735b are configured to interact with interior walls to form a second area/chamber 745b adjacent the outlet 715. The first and second areas 745a and 745b formed by the enclosure 702 and moving shield elements 725 provide a barrier to laser emissions leaving the interior space 717 of the enclosure.

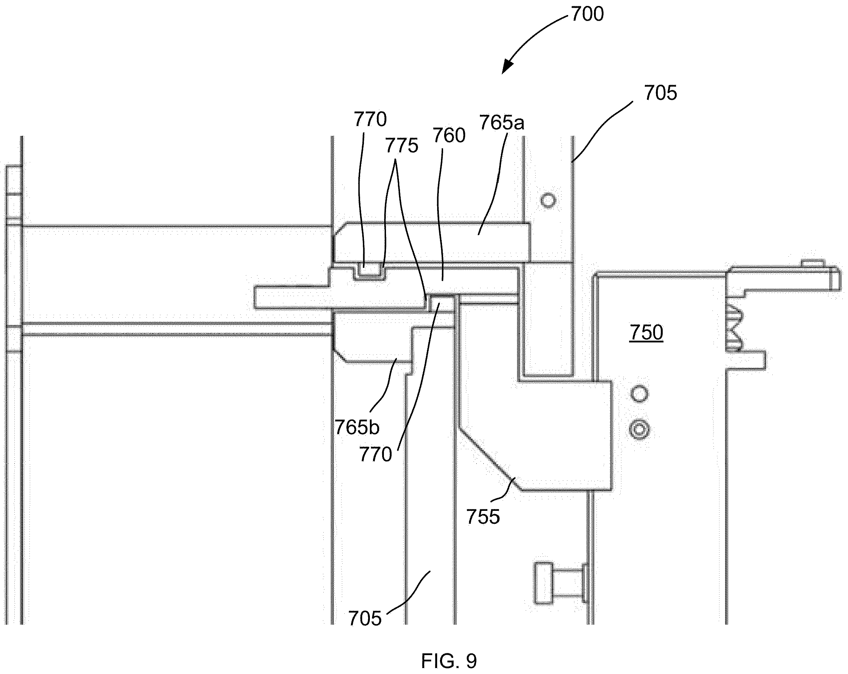

Fig. 9 is a side sectional view of the laser operation system of Fig. 7. It will be understood that elements of Fig. 9 can be used with other embodiments than that shown in Fig. 7 as well. In Fig. 9, the section also shows the moving element 750 and a gooseneck 755 attached between the moving element 750 and a pallet 760, which carries a workpiece. The enclosure 702 includes flanges 765 (in this case 765a, 765b) to conform the enclosure 702 to the shape of the gooseneck 755 and the pallet 760. The shape of the gooseneck 755 and pallet 760 combination is configured to provide angles between the interior space 717 and the outside of the enclosure with the intent of extending the light path and/or number of reflections required for laser light to exit from the enclosure.

Further, one or more keys 770 and key grooves 775 can be provided between the pallet 760 and the flanges 765 (or enclosure 702) to further control the emission of laser light from the enclosure 702. As shown in Fig. 9, a key 770 provided to a top flange 765a extends downward into a key groove 775 in the pallet 760. The key and key groove are also intended to extend the light path and/or number of reflections required for laser light to exit from the enclosure.

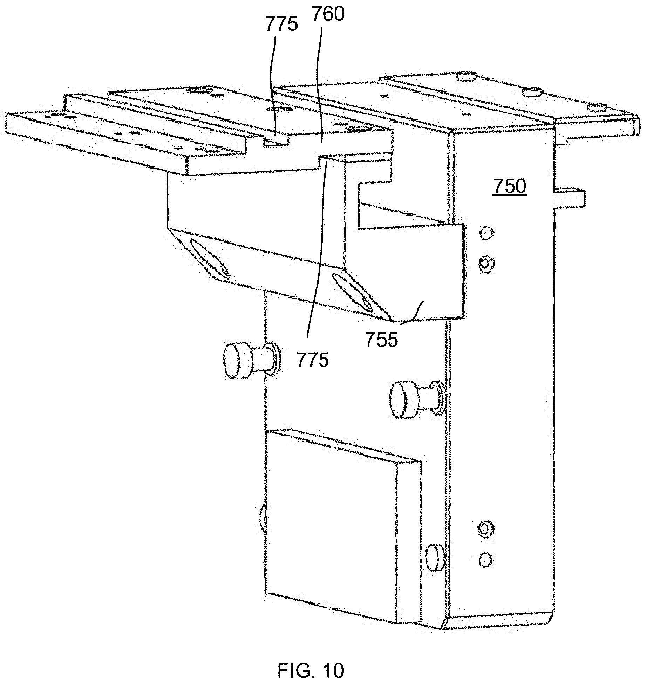

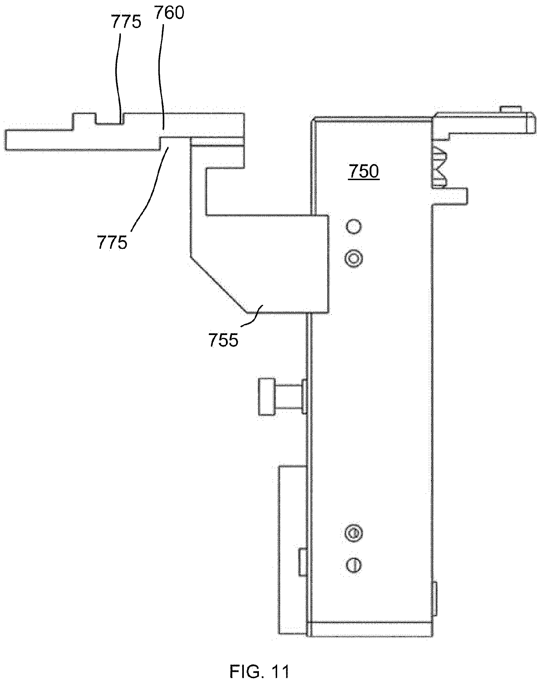

Fig. 10 is a perspective view of an embodiment of a moving element and associated pallet for use with the laser operation system of Fig. 7 or similar. Fig. 11 is a side view of the moving element and associated pallet of Fig. 10. Figs. 10 and 11 provide a clearer view of the gooseneck 755, the pallet 760 and the key grooves 775.

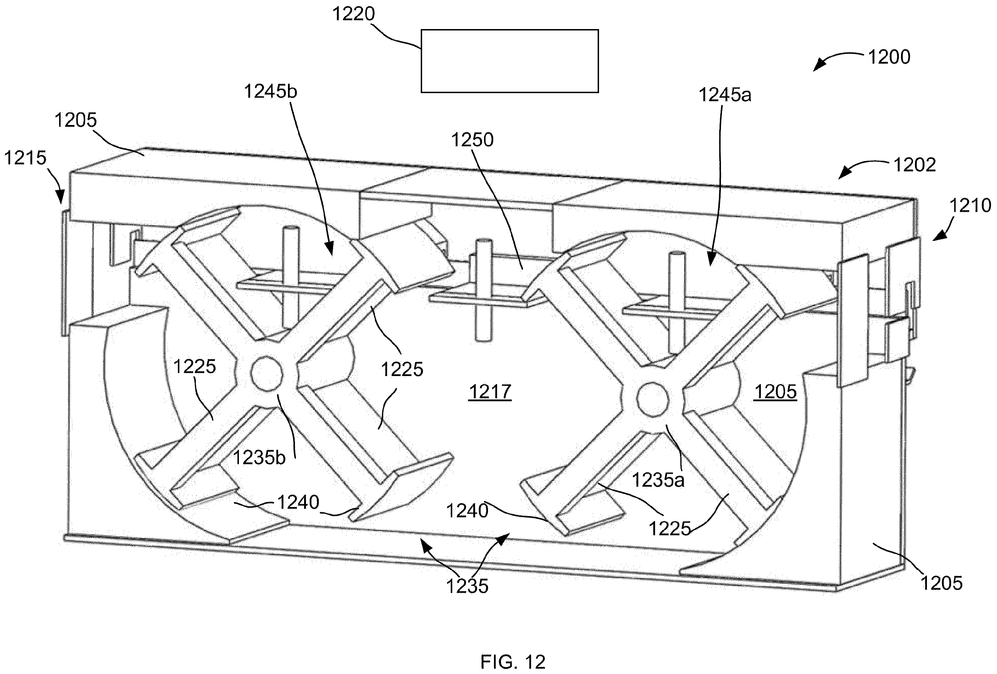

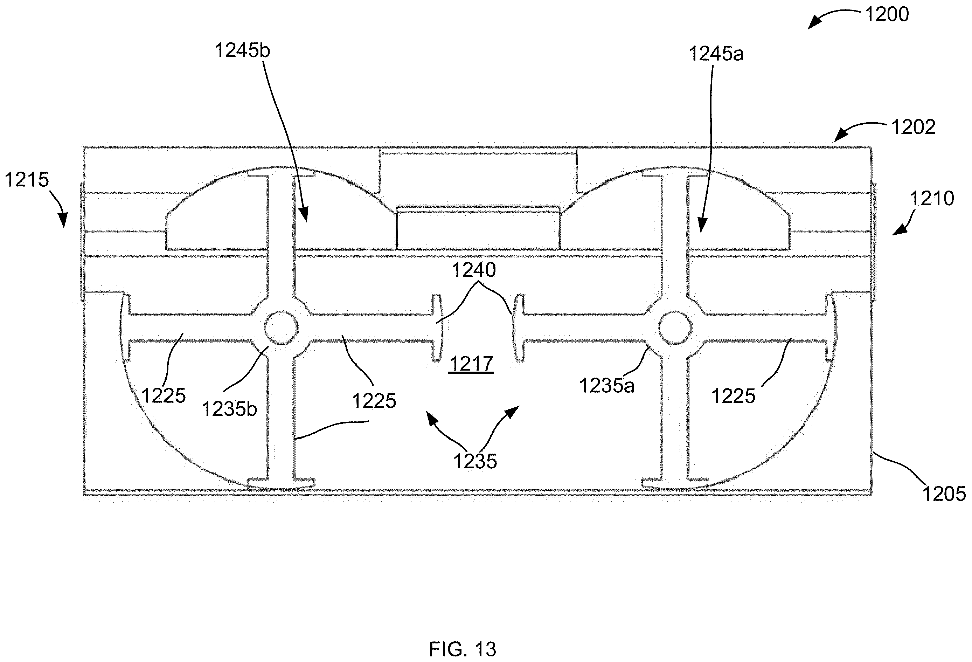

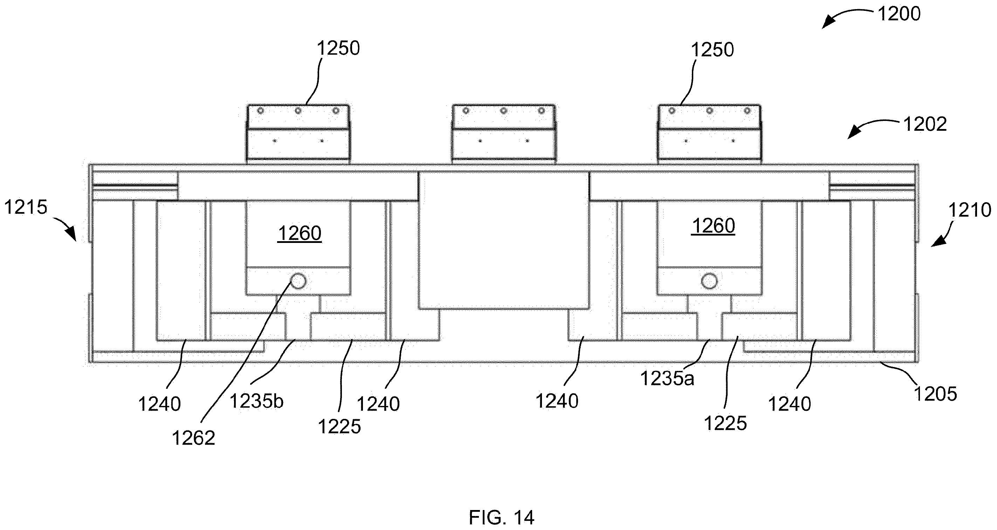

Fig. 12 is a perspective front view of another embodiment of a laser operation system 1200 illustrating the interior thereof. The laser operation system 1200 is similar to the laser operation system 700 and elements/aspects of each may be used, as appropriate, each with the other. Fig. 13 is a front view of the laser operation system of Fig. 12 also illustrating the interior thereof. Fig. 14 is a top view of the laser operation system of Fig. 12 also illustrating the interior thereof. In Figs. 12, 13, and 14, the laser operation system 1200 is shown in a cut-away view illustrating an interior thereof. Similar to the embodiment of Figs. 7 and 8, the laser operation station 1200 includes an enclosure 1202 formed of one or more stationary shield elements 1205. The enclosure has an inlet 1210 and an outlet 1215, with the enclosure 1202 generally defining an interior space 1217. The laser operation system 1200 can also include a laser 1220 configured to conduct a laser operation within the laser operation station 1200. In some cases, the laser may be sold separately from the laser operation station 1200. The laser operation station 1200 also includes moving shield elements 1225 configured to control the exfiltration of laser emissions (laser light) (not shown but similar to that in Fig. 7, 8) from the interior space 1217 of the enclosure 1202. Figs. 12, 13, and 14 also show moving elements 1250 of a conveyor system.

Similar to the above embodiment, it will be understood that the laser 1220 may be mounted in different configurations, including on a front, back, angled or the like, in relation to the interior space 1217. Further, the laser 1220 will generally be mounted within the enclosure but some walls of the enclosure are not shown in order to illustrate the interior elements.

The moving shield elements (sometimes called baffles) 1225 can be configured as extensions/spokes extending from two rotating wheels 1235, which are associated with each of the inlet 1210 and the outlet 1215. The rotating wheels 1235 rotate in synchronization with the movement of the moving elements 1250 (and the parts they carry) to block laser emissions from exiting the interior space 1217 of the enclosure. Each of the moving shield elements 1225 includes an end piece 1240, configured to provide extended or flexible contact with the fixed shield elements of the enclosure 1202.

Similar to the embodiment shown in Figs. 7 and 8, the enclosure 1202 may include interior stationary shield elements/walls 1205 shaped to allow a close contact to the moving shield elements 1225 having the end pieces 1240 as the moving shield elements 1225 move within the enclosure 1202. A combination of two adjacent moving shield elements 1225 on a first rotating wheel 1235a are configured to interact with stationary shield elements of the enclosure to form a first area/chamber 1245a adjacent the inlet 1210 and a combination of two adjacent moving shield elements 1225 on a second rotating wheel 1235b are configured to interact with interior walls to form a second area/chamber 1245b adjacent the outlet 1215. The first and second areas 1245a and 1245b formed by the enclosure 1202 and moving shield elements 1225 provide a barrier to laser emissions leaving the interior space 1217 of the enclosure.

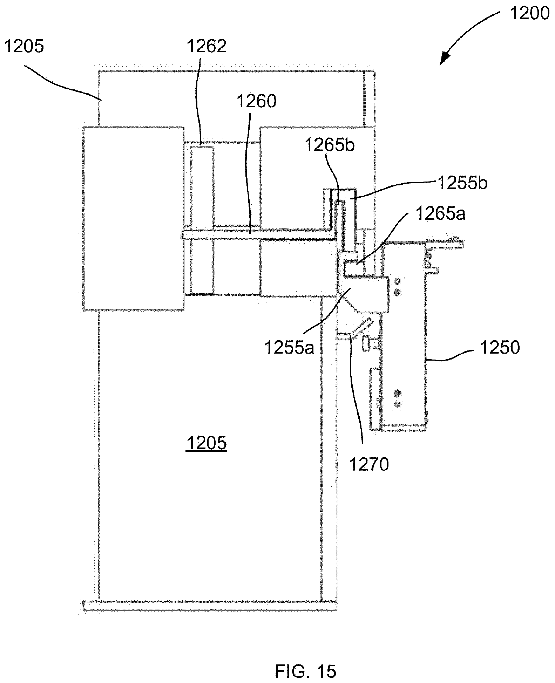

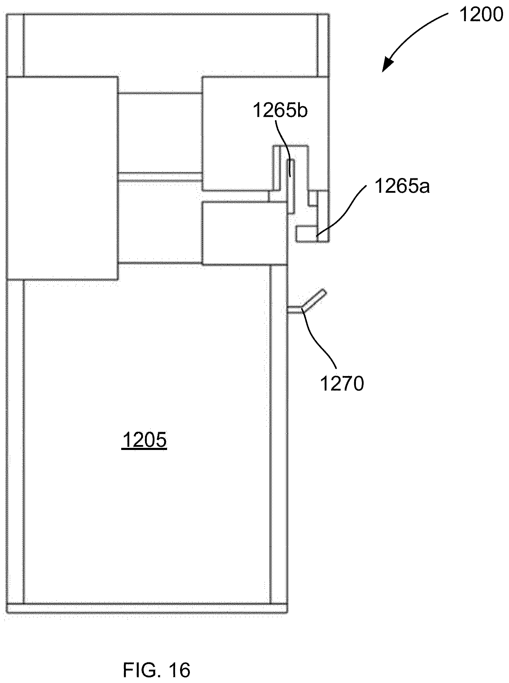

Fig. 15 is a side view of the laser operation system of Fig. 12 showing a moving element and pallet and Fig. 16 is a side view of the laser operation system of Fig. 15 without the moving element and pallet. In Fig. 15, the moving element 1250 carries a pallet 1260 and includes two goosenecks 1255a and 1255b between the moving element 1250 and the pallet 1260, which carries a part/workpiece 1262. The enclosure 1202 includes flanges 1265a and 1265b to conform the enclosure 1202 to the shape of the goosenecks 1255a and 1255b and the pallet 1260. The shape of the goosenecks 1255a, 1255b and pallet 1260 combination is configured to provide angles between the interior space 1217 and the outside of the enclosure with the intent of extending the light path and/or number of reflections required before laser light can exit from the enclosure. The enclosure may also include an external flange 1270 to further reflect any laser emissions that might leave the enclosure.

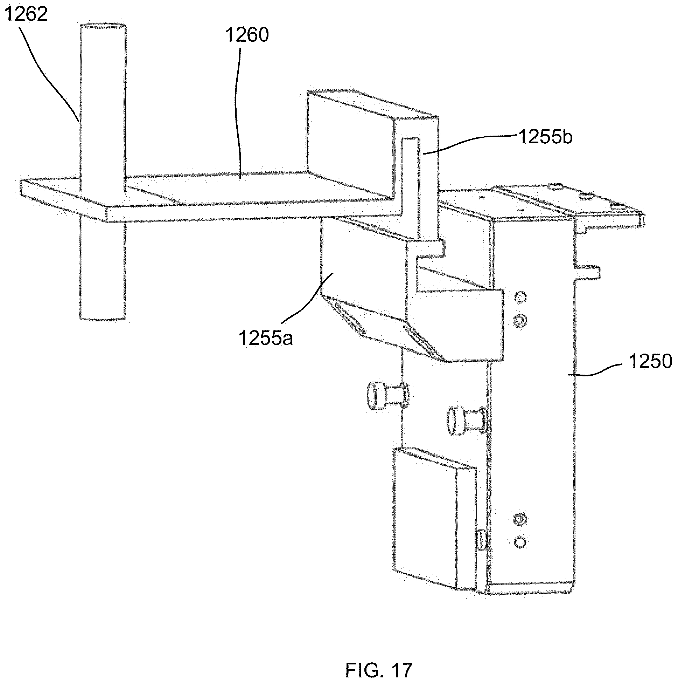

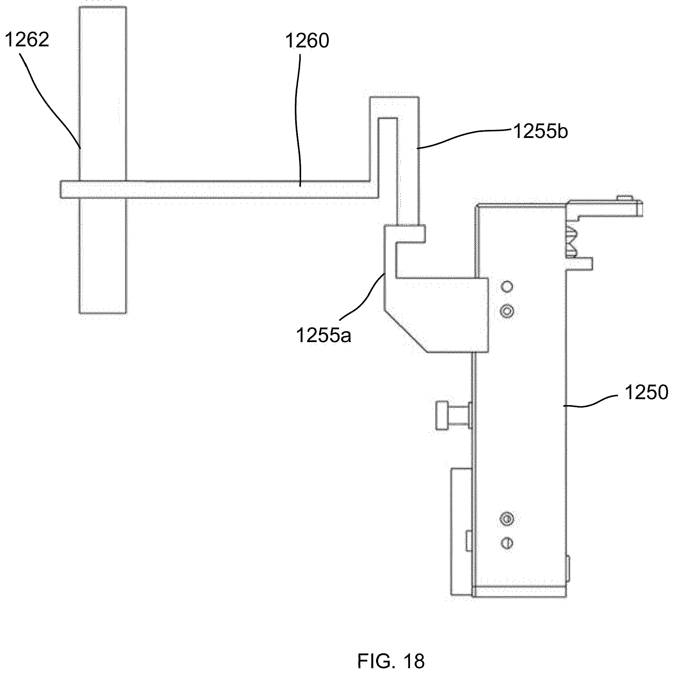

Fig. 17 is a perspective view of another embodiment of a moving element and associated pallet for use with the laser operation system of Figs. 15, 16. Fig. 18 is a side view of the moving element and associated pallet of Fig. 17. As shown in Figs. 17 and 18, the goosenecks 1255a and 1255b are configured to cause laser emissions to travel along a longer path and with more reflections prior to being able to leave the enclosure. It will be understood that the configuration and quantity of goosenecks can be varied depending on the amount and strength of laser emissions in the interior of the enclosure, the level of risk of emissions causing harm, and the like. The gooseneck structures illustrated in Figs. 10, 11, 17 and 18 are examples but other structures, including a different configuration or number of goosenecks, may also be appropriate as will be apparent to one of skill in the art upon reading the present disclosure.

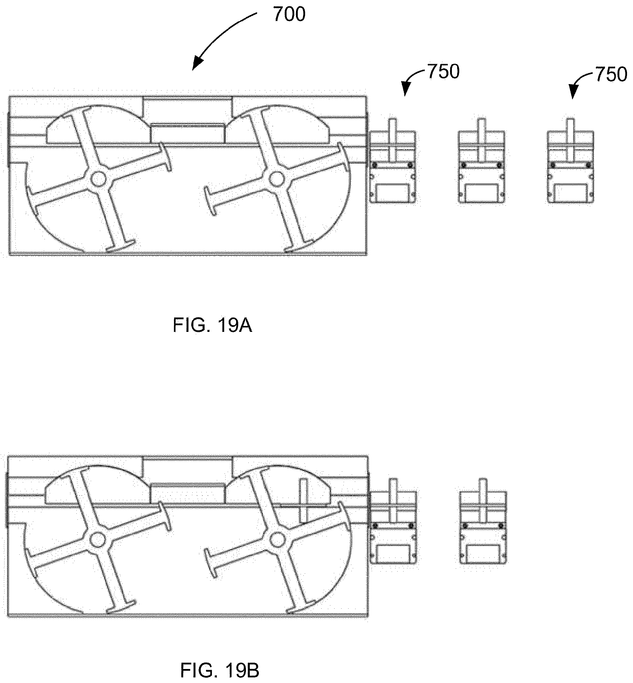

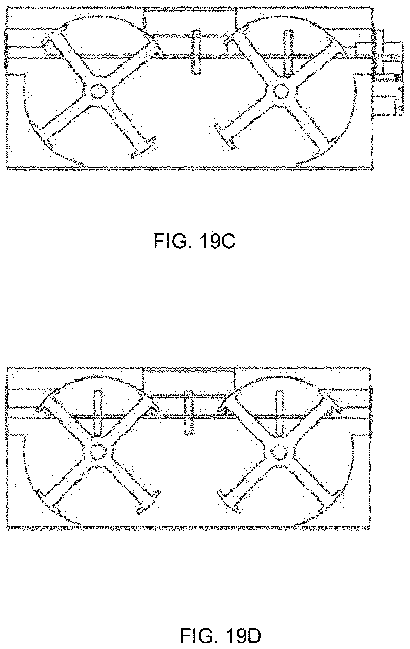

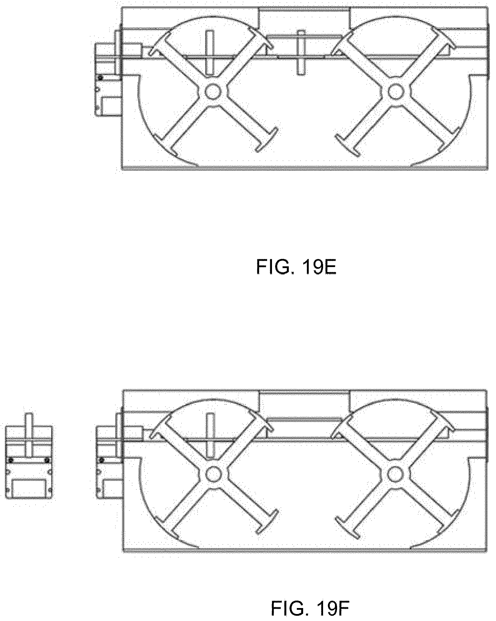

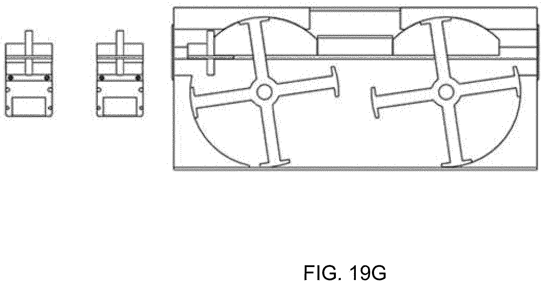

Figs. 19A-G illustrate operation of the laser operation system of Figs. 7 or 12 or similar. It will be understood that the general approach may also be extrapolated and used with other configurations of laser operation systems. In Fig. 19A, moving elements 750 are being moved by the conveyor system (not shown) toward the laser operation system 700 and the baffles/rotating wheel is moving in synchronized movement with the moving elements. In Fig. 19B, a first workpiece /pallet has moved through the inlet and into a first area/chamber of the enclosure. Only the first workpiece /pallet are shown in Fig. 19B because the moving element will be outside/behind the enclosure. A first baffle has rotated/moved ahead of the first workpiece /pallet, while a second baffle follows the first workpiece /pallet, effectively sealing off the first chamber. Fig. 19C shows a situation where the first workpiece /pallet has moved into the interior space of the enclosure and a second workpiece /pallet is effectively sealed in the first chamber. In this situation, the first workpiece /pallet can be exposed to laser light as the baffles limit the emission of laser light from the interior space to the first chamber, second area/chamber or external to the enclosure. Fig. 19D shows a situation where the first workpiece/pallet is sealed in the second area/chamber, the second workpiece /pallet is in the interior space, and a third workpiece /pallet is in the first area/chamber. Figs. 19E, 19F, and 19G show the further movement of the three workpieces/pallets through the laser operation system.

As can be seen, the moving elements (and thereby the workpieces/pallets) can move continuously through the laser operation station in synchronization with the rotating wheels/baffles. Although three moving elements are illustrated, it will be understood that any number of moving elements, with corresponding workpieces/pallets, can be processed in a continuous fashion. The use of the baffles and first and second chambers assist with minimizing emission of laser light from the enclosure. As discussed above, any laser light that might leave the chamber via the connection of the pallet to the gooseneck(s) and moving element can be effectively blocked by the gooseneck(s) themselves or by the use of additional features such as keys and key grooves.

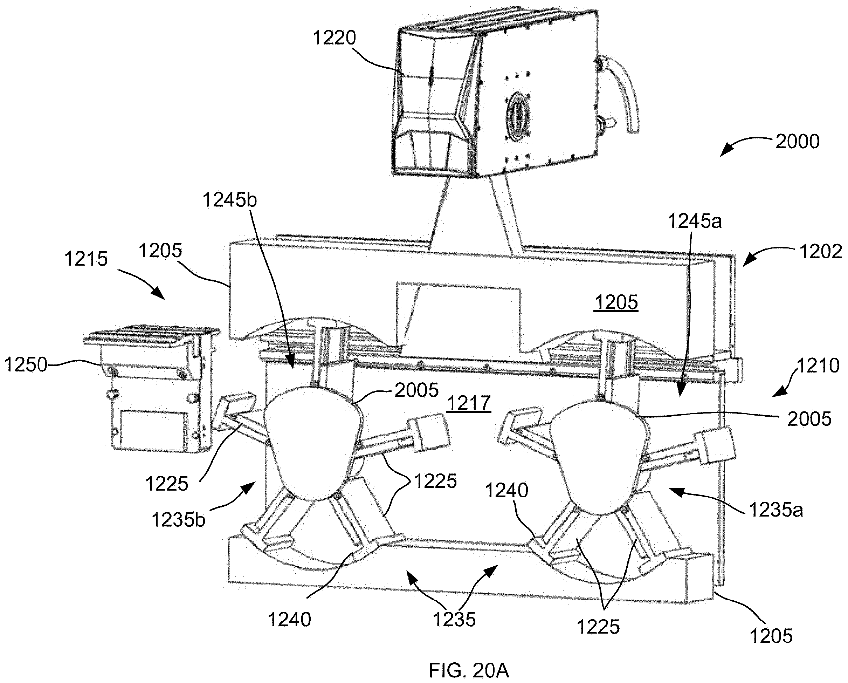

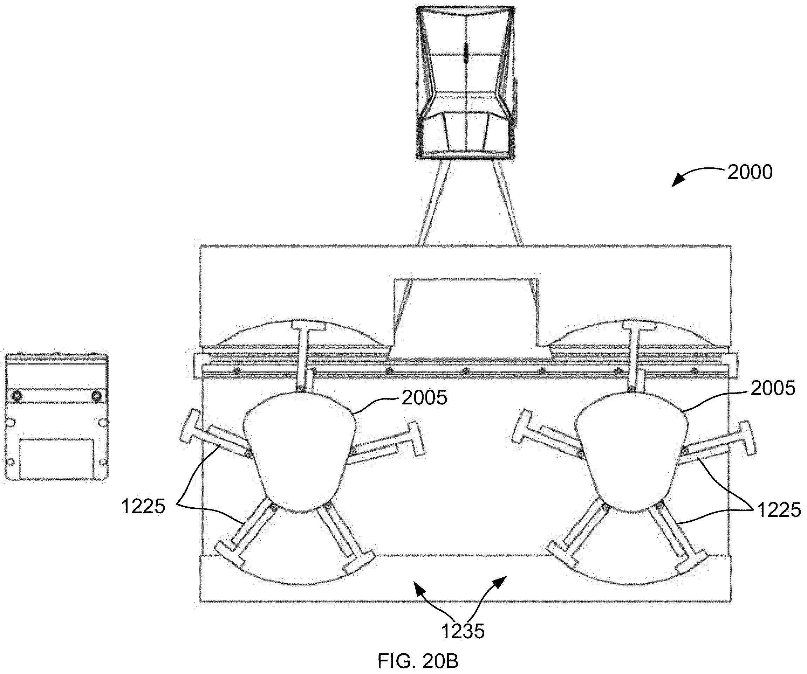

Fig. 20A is a perspective front view of another embodiment of a laser operation system 2000 illustrating an interior thereof. As noted above, elements/features of this embodiment may be used with other embodiments herein as appropriate to one of skill in the art. Fig. 20B is a front view of the laser operation system 2000 of Fig. 20A. The altemative embodiment shown in Figs. 20A and 20B is similar to the embodiments of Figs. 7 and 12. For convenience, similar numbering has been used from the embodiment of Fig. 12 for similar elements in Fig. 20A and 20B. However, in Figs. 20A and 20B, each baffle 1225 on each rotary wheel1235 has been adapted to extend and contract in order to seal the appropriate chamber during movement. As one example, the extension/contraction (movement) of each baffle 1225 may be caused by the motion of a cam 2005 that is provided adjacent to each rotary wheel 1235. It will be understood that other mechanical, electrical, or the like mechanisms may be used to control the movement of the baffles 1235. With this structure, each baffle extends in an area where clearance is required to allow a workpiece through the inlet 1210 or outlet 1215 and when forming the first and second chambers 1245a, 1245b but contracts in an area where the baffle 1235 is not in use. This arrangement allows for a more compact enclosure while providing the same or similar functionality.

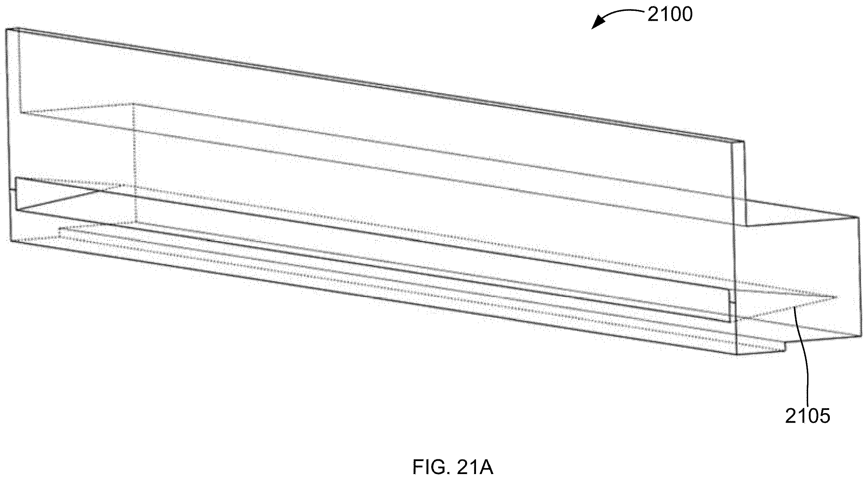

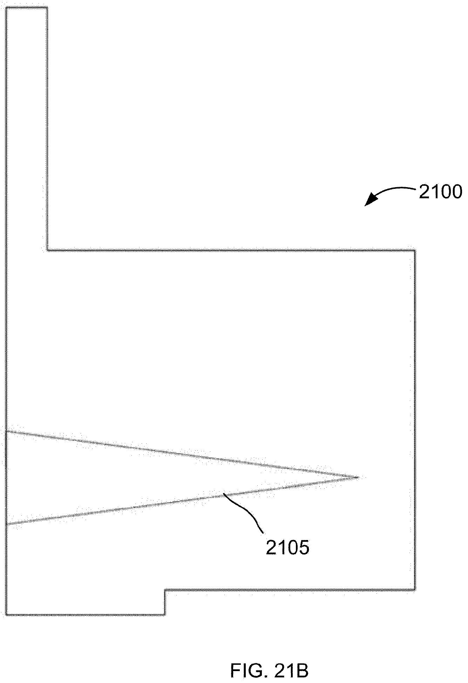

Fig. 21A is a perspective view of an alternate structure 2100 for use with the enclosure of the various embodiments as described above. This alternate structure 2100 may also be used with different or a combination of embodiments herein or as understood by one of skill in the art. Fig. 21B is a side sectional view of the alternate structure 2100 of Fig. 21A. In various embodiments, the enclosure may include the alternate structure 2100 in which an extension 2105 is added to the enclosure to provide a reflection trap to, for example, one or more stationary shield elements of the enclosure. In the example shown in Figs. 21A and 21B, the reflection trap is a v-shaped portion that is open to an interior space of the enclosure such that laser emissions enter the v-shaped portion and have multiple reflections rather than merely reflecting off of a flat wall of the enclosure. This alternate structure may be placed at various locations around the interior space of the enclosure, depending on the position of the laser, conveyor/moving element, or the like. It will be understood that the alternate structure 2100 may include any shape that reduces or attenuates the reflection of light such that there is less chance of emission of the light from the enclosure.

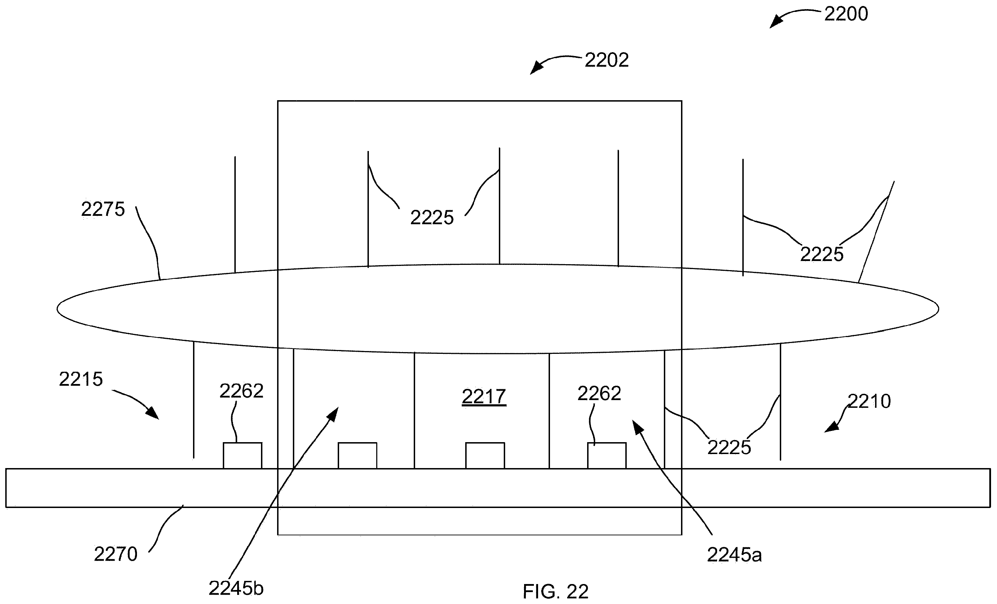

Fig. 22 is a front view of yet another laser operation system 2200. Again, elements of the laser operation system of Fig. 22 may be used with, combined, with, or otherwise shared with the other embodiments herein. The laser operation system 2200 includes an enclosure 2202 with an inlet 2210 and an outlet 2215. The laser operation system 2200 also includes a laser (not shown), which, as in other embodiments, may be provided in various positions in relation to the enclosure, such as the front, top or back of the enclosure 2202 (front or back configuration shown - i.e. above or below the plane of the paper). In Fig. 22, workpieces 2262 move along a first conveyor 2270. A second conveyor 2275 is provided adjacent (in this case above) the first conveyor 2270 with shield elements/baffles 2225 that extend outwardly from the second conveyor 2275 to make contact with the first conveyor 2270 over a predetermined distance along the first conveyor. The second conveyor 2275 is configured such that the baffles 2225 move synchronously with workpieces 2262 on the first conveyor 2270. Somewhat similar to embodiments above, the baffles 2225 are moved in a way that a workpiece is placed in a first chamber 2245a as it enters an inlet of the enclosure, the first chamber moves ahead to an interior space 2217 of the enclosure, where the workpiece is operated on by the laser. When the first chamber moves to the interior space, a new first chamber is formed by a new baffle making contact with the first conveyor. The baffles surrounding the interior space continue to move with the workpiece and form a second chamber 2245b adjacent the outlet. The movement of the baffles 2225 and the workpiece 2262 then cause the second chamber 2245b to open and release the workpiece through the outlet of the enclosure. In some embodiments, the movement of the baffles/shield elements 2225 can be driven, mechanically, electrically or the like, by movement of the first conveyor or vice versa.

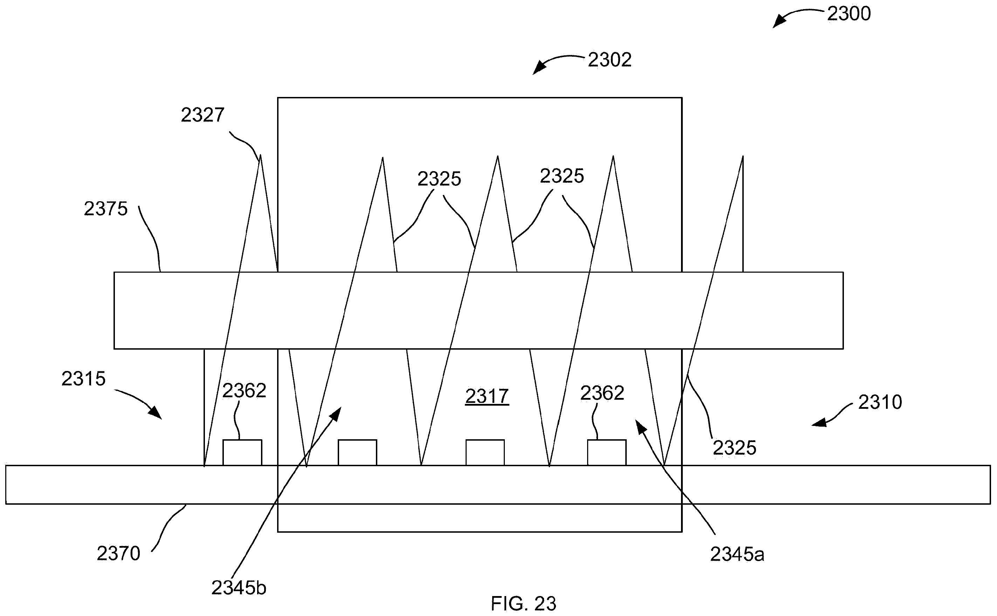

Fig. 23 is a front view of still yet another laser operation system 2300 in which a shield element/baffle 2325 is provided via a type of worm gear 2375. As with other embodiments, elements of the other embodiments herein may be used with this embodiment and vice versa. Further, as in other embodiments, the laser operation system 2300 includes an enclosure 2302 with an inlet 2310 and an outlet 2315. The laser operation system 2300 also includes a laser (not shown), which, as in other embodiments, may be provided in various positions in relation to the enclosure, such as the front, top or back of the enclosure 2202 (front or back configuration shown - i.e. above or below the plane of the paper due to the location of the worm gear 2375). In Fig. 23, workpieces 2362 move along a first conveyor 2370. The worm gear 2375 is provided adjacent (in this case, above) the first conveyor 2370 and the screw portion 2327 of the worm gear 2375 acts as the shield element/baffle 2325 that extends outwardly from the worm gear 2375 to make contact with the first conveyor 2370 over a predetermined distance along the first conveyor. The worm gear 2375 is configured such that the screw/baffle 2325 moves synchronously with workpieces 2362 on the first conveyor 2370. Somewhat similar to embodiments above, the screw/baffle 2325 is moved in a way that the workpiece 2362 is placed in a first chamber 2345a as it enters the inlet 2310 of the enclosure 2302, the first chamber 2345a moves ahead to an interior space 2317 of the enclosure, where the workpiece 2362 is operated on by the laser. When the first chamber moves to the interior space, a new first chamber 2345a is formed by a new baffle 2325 (portion of the screw 2327) making contact with the first conveyor 2370. The baffles 2325 (portion of the screw 2327) surrounding the interior space continue to move with the workpiece 2362 and form a second chamber 2345b adjacent the outlet 2315. The movement of the baffles 2325 and the workpiece 2362 then cause the second chamber 2345b to open and release the workpiece 2362 through the outlet 2315 of the enclosure 2302. As noted above, in some embodiments, the movement of the shield elements/worm gear can be driven, mechanically, electrically or the like, by or based on movement of moving elements of the first conveyor or vice versa.

It will be understood that embodiments of the system and method herein may more generally be used as a gating system for controlling access to a part of a conveyor system or of an automation system. In this situation, the interior space described herein may be made larger and/or may be made open to provide a protected area between two gateway stations. The first gateway station structured similar to the first area and the second gateway station structured similar to the second area described herein. In this case, each gateway station will include moving shields/baffles provided that move to provide access/egress by a moving element/workpiece to/from the protected area. In some cases, the protected area may include higher risk stations, while in other cases, the protected area may be for lower risk stations where humans may interact with workpieces. In some cases, in an embodiment herein, each gateway station itself may include a first area, interior space, and second area, such that the gateway station can provide additional protection with regard to access/egress from a protected area between two gateway stations.

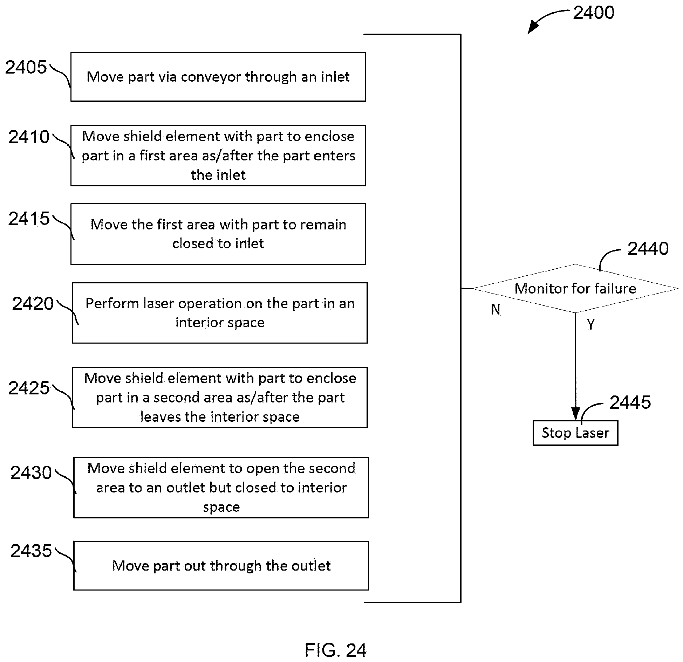

Fig. 24 is a flowchart illustrating an embodiment of a method 2400 of laser operations in an automation system. At 2405, a part is moved along a conveyor and through an inlet in an enclosure at the laser operation station. At 2410, at least one shield element is moved synchronously with the part such that the part is enclosed in a first area as or after entering the inlet. The at least one shield element is configured to block laser emissions from an interior space of the enclosure from exiting through the inlet. At 2415, the at least one shield element continues to move with the part as the part moves along the conveyor such that there at least a portion of the at least one shield element or at least one of a plurality of shield elements blocks the inlet. At 2420, a laser operation is performed on the part in the interior space of the enclosure. At 2425, the at least one shield element is moved with the part as the part moves along the conveyor to enclose the part in a second area as or after the part leaves the interior space. As with the inlet, the at least one shield element is configured to block laser emissions from the interior space from exiting through an outlet of the enclosure. At 2430, the at least one shield element is moved to open the second area to the outlet of the enclosure while maintaining a barrier to the interior space. At 2435, the part is moved out through the oulet. Throughout operation of the laser operation station, at 2440, the method monitors for any actions, faults or failures with the system that might pose a risk and, at 2445, stops the laser if there are any issues.

It is intended that each of the embodiments described herein illustrate various configurations of systems that allow operation of this more general method in order to illustrate ways in which one of skill in the art may implement the concepts herein. Elements/features of each embodiment may be used with other embodiments.

In the preceding description, for purposes of explanation, numerous details are set forth in order to provide a thorough understanding of the embodiments. However, it will be apparent to one skilled in the art that these specific details may not be required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

The above-described embodiments are intended to be examples only. Alterations, modifications and variations can be effected to the particular embodiments by those of skill in the art without departing from the scope of the present invention as defined in the appended claims.

## Claims

1. An automation system comprising a conveyor for carrying one or more workpieces, and a laser operation system (700, 1200, 2200, 2300), the laser operation system comprising:
a laser (720, 1220);
one or more stationary shield elements (705, 1205) forming an enclosure (702, 1202, 2202, 2302) for the laser, with an inlet (710, 1210, 2210, 2310) and an outlet (715, 1215, 2215, 2315), and positioned such that a work piece of the one or more workpieces on a conveyor can enter the inlet and exit the outlet;
the system **characterised by**:
the conveyor being a linear motor conveyor (20); and
one or more moving shield elements (725, 1225, 2225, 2325) configured to move with the one or more workpieces as, in use,
the workpieces are moved in continuous motion by the linear motor conveyor (20) into laser emissions from the laser, wherein, in use, the linear motor conveyor synchronizes the independent movement of the one or more workpieces with the movement of the moving shield elements,
wherein the one or more moving shield elements comprise an end piece (740, 1240) to provide extended or flexible contact with the stationary shield elements while also allowing movement to reduce exfiltration of laser emissions from the inlet or outlet while the one or more workpieces are moving through the enclosure.

2. An automation system according to claim 1, wherein the movement of the one or more moving shield elements is non-reversing.

3. An automation system according to any one of claims 1 and 2, further comprising a wheel supporting the one or more moving shield elements such that the movement of the one or more moving shield elements is rotational.

4. An automation system according to any one of claims 1 to 3, wherein, in use, the speed of the movement of the one or more moving shield elements is adapted to the movement of the one or more workpieces on the conveyor.

5. An automation system according to any one of claims 1 to 4, wherein the one or more moving shield elements comprise two wheels, a first wheel at the inlet and a second wheel at the outlet, wherein the two wheels co-operate with the enclosure to create:
a temporary first chamber adjacent the inlet formed by the first wheel;
a temporary second chamber adjacent the outlet formed by the second wheel; and
an interior space between the first and second chambers in which the laser emissions reach the one or more workpieces.

6. An automation system according to any one of claims 1 to 5, wherein the one or more moving shield elements is configured to extend when needed to reduce exfiltration and to contract when not needed to reduce exfiltration.

7. An automation system according to any one of claims 1 to 6, wherein the conveyor (20) comprises a pallet, so that the one or more workpieces are carried by the pallet, wherein the pallet and workpiece enter the inlet and exit the outlet.

8. An automation system according to any one of claims 1 to 7, wherein the one or more moving shield elements are moved by the conveyor carrying the one or more workpieces or a moving element of the conveyor carrying the one or more workpieces.

9. A method (2400) for laser operation in an automation system, the automation system including one or more workpieces carried by a linear motor conveyor, the method comprising:
moving a workpiece toward an inlet of a laser operation station via the linear motor conveyor (2405);
moving at least one shield element with the workpiece to enclose the workpiece in a first area as the workpiece enters the inlet, wherein the linear motor conveyor synchronizes the movement of the workpiece with the movement of the at least one shield element (2410);
moving the first area with the workpiece such that the first area remains closed to the inlet but the workpiece moves into an interior space of the laser operation station, wherein the linear motor conveyor synchronizes the movement of the workpiece with the movement of the first area (2415);
performing a laser operation on the workpiece in the interior space as the workpiece moves continuously via the linear motor conveyor in synchronization with the laser operation (2420);
moving at least one other shield element with the workpiece to enclose the workpiece in a second area that is different from the first area as the workpiece moves from the interior space toward the outlet, wherein the linear motor conveyor synchronizes the movement of the workpiece with the movement of the second area (2425);
moving the second area with the workpiece such that the second area remains closed to the interior space but the workpiece moves through the outlet, wherein the linear motor conveyor synchronizes the movement of the workpiece with the movement of the second area (2430); and
moving the workpiece out of the outlet, via the linear motor conveyor (2435).

10. A laser operation method according to claim 9, wherein the movement of the at least one shield element and the at least one other shield element are non-reversing.

11. A laser operation method according to any one of claims 9 and 10, wherein the movement of the at least one shield element and the at least one other shield element is rotational.

12. A laser operation method according to any one of claims 9 to 11, wherein the at least one shield element and the at least one other shield element are configured to extend when needed to reduce exfiltration and to contract when not needed to reduce exfiltration.

13. An automation system according to any one of claims 1 to 8, further comprising at least one gooseneck between each workpiece and the linear motor conveyor.

## Patentansprüche

1. Ein Automatisierungssystem, das einen Förderer zum Tragen eines oder mehrerer Werkstücke und ein Laserbetriebssystem (700, 1200, 2200, 2300) beinhaltet, wobei das Laserbetriebssystem Folgendes beinhaltet:
einen Laser (720, 1220);
ein oder mehrere stationäre Abschirmungselemente (705, 1205), die ein Gehäuse (702, 1202, 2202, 2302) für den Laser bilden, mit einem Einlass (710, 1210, 2210, 2310) und einem Auslass (715, 1215, 2215, 2315) und so positioniert, dass ein Werkstück des einen oder der mehreren Werkstücke auf einem Förderer in den Einlass eintreten und aus dem Auslass austreten kann;
wobei das System **dadurch gekennzeichnet ist, dass**:
der Förderer ein Linearmotorförderer (20) ist; und
ein oder mehrere sich bewegende Abschirmungselemente (725, 1225, 2225, 2325) konfiguriert sind, um sich mit dem einen oder den mehreren Werkstücken zu bewegen, wenn die Werkstücke im Gebrauch durch den Linearmotorförderer (20) in kontinuierlicher Bewegung in die Laseremissionen des Lasers bewegt werden, wobei der Linearmotorförderer im Gebrauch die unabhängige Bewegung des einen oder der mehreren Werkstücke mit der Bewegung der sich bewegenden Abschirmungselemente synchronisiert,
wobei das eine oder die mehreren sich bewegenden Abschirmungselemente ein Endstück (740, 1240) beinhalten, um einen erweiterten oder flexiblen Kontakt mit den stationären Abschirmungselementen bereitzustellen, während gleichzeitig eine Bewegung ermöglicht wird, um das Entweichen von Laseremissionen aus dem Einlass oder Auslass zu reduzieren, während sich das eine oder die mehreren Werkstücke durch das Gehäuse bewegen.

2. Automatisierungssystem gemäß Anspruch 1, wobei die Bewegung des einen oder der mehreren sich bewegenden Abschirmungselemente nicht umkehrend ist.

3. Automatisierungssystem gemäß einem der Ansprüche 1 und 2, das ferner ein Rad beinhaltet, das das eine oder die mehreren sich bewegenden Abschirmungselemente trägt, sodass die Bewegung des einen oder der mehreren sich bewegenden Abschirmungselemente drehend ist.

4. Automatisierungssystem gemäß einem der Ansprüche 1 bis 3, wobei die Geschwindigkeit der Bewegung des einen oder der mehreren sich bewegenden Abschirmungselemente im Gebrauch an die Bewegung des einen oder der mehreren Werkstücke auf dem Förderer angepasst ist.

5. Automatisierungssystem gemäß einem der Ansprüche 1 bis 4, wobei das eine oder die mehreren sich bewegenden Abschirmungselemente zwei Räder beinhalten, ein erstes Rad an dem Einlass und ein zweites Rad an dem Auslass, wobei die zwei Räder mit dem Gehäuse zusammenwirken, um Folgendes zu erzeugen:
eine zu dem Einlass benachbarte temporäre erste Kammer, die durch das erste Rad gebildet wird;
eine zu dem Auslass benachbarte temporäre zweite Kammer, die durch das zweite Rad gebildet wird; und
einen Innenraum zwischen der ersten und der zweiten Kammer, in dem die Laseremissionen das eine oder die mehreren Werkstücke erreichen.

6. Automatisierungssystem gemäß einem der Ansprüche 1 bis 5, wobei das eine oder die mehreren sich bewegenden Abschirmungselemente konfiguriert sind, um sich auszudehnen, wenn dies zur Reduzierung des Entweichens erforderlich ist, und sich zusammenzuziehen, wenn dies zur Reduzierung des Entweichens nicht erforderlich ist.

7. Automatisierungssystem gemäß einem der Ansprüche 1 bis 6, wobei der Förderer (20) eine Palette beinhaltet, sodass das eine oder die mehreren Werkstücke durch die Palette getragen werden, wobei die Palette und das Werkstück in den Einlass eintreten und aus dem Auslass austreten.

8. Automatisierungssystem gemäß einem der Ansprüche 1 bis 7, wobei das eine oder die mehreren sich bewegenden Abschirmungselemente durch den Förderer, der das eine oder die mehreren Werkstücke trägt, oder ein sich bewegendes Element des Förderers, der das eine oder die mehreren Werkstücke trägt, bewegt werden.

9. Ein Verfahren (2400) für einen Laserbetrieb in einem Automatisierungssystem, wobei das Automatisierungssystem ein oder mehrere Werkstücke umfasst, die durch einen Linearmotorförderer getragen werden, wobei das Verfahren Folgendes beinhaltet:
Bewegen eines Werkstücks in Richtung eines Einlasses einer Laserbetriebsstation über den Linearmotorförderer (2405);
Bewegen mindestens eines Abschirmungselements mit dem Werkstück, um das Werkstück in einem ersten Bereich zu umschließen, wenn das Werkstück in den Einlass eintritt, wobei der Linearmotorförderer die Bewegung des Werkstücks mit der Bewegung des mindestens einen Abschirmungselements synchronisiert (2410); Bewegen des ersten Bereichs mit dem Werkstück, sodass der erste Bereich zu dem Einlass geschlossen bleibt, sich das Werkstück aber in einen Innenraum der Laserbetriebsstation bewegt, wobei der Linearmotorförderer die Bewegung des Werkstücks mit der Bewegung des ersten Bereichs synchronisiert (2415);
Durchführen eines Laserbetriebs an dem Werkstück in dem Innenraum, während sich das Werkstück über den Linearmotorförderer kontinuierlich in Synchronisation mit dem Laserbetrieb bewegt (2420);
Bewegen mindestens eines anderen Abschirmungselements mit dem Werkstück, um das Werkstück in einem zweiten Bereich, der sich von dem ersten Bereich unterscheidet, zu umschließen, wenn sich das Werkstück aus dem Innenraum in Richtung des Auslasses bewegt, wobei der Linearmotorförderer die Bewegung des Werkstücks mit der Bewegung des zweiten Bereichs synchronisiert (2425); Bewegen des zweiten Bereichs mit dem Werkstück, sodass der zweite Bereich zu dem Innenraum geschlossen bleibt, sich das Werkstück aber durch den Auslass bewegt, wobei der Linearmotorförderer die Bewegung des Werkstücks mit der Bewegung des zweiten Bereichs synchronisiert (2430); und
Bewegen des Werkstücks aus dem Auslass über den Linearmotorförderer (2435).

10. Laserbetriebsverfahren gemäß Anspruch 9, wobei die Bewegung des mindestens einen Abschirmungselements und des mindestens einen anderen Abschirmungselements nicht umkehrend ist.

11. Laserbetriebsverfahren gemäß einem der Ansprüche 9 und 10, wobei die Bewegung des mindestens einen Abschirmungselements und des mindestens einen anderen Abschirmungselements drehend ist.

12. Laserbetriebsverfahren gemäß einem der Ansprüche 9 bis 11, wobei das mindestens eine Abschirmungselement und das mindestens eine andere Abschirmungselement konfiguriert sind, um sich auszudehnen, wenn dies zur Reduzierung des Entweichens erforderlich ist, und sich zusammenzuziehen, wenn dies zur Reduzierung des Entweichens nicht erforderlich ist.

13. Automatisierungssystem gemäß einem der Ansprüche 1 bis 8, das ferner mindestens einen Schwanenhals zwischen jedem Werkstück und dem Linearmotorförderer beinhaltet.

## Revendications

1. Un système d'automatisation comprenant un convoyeur pour porter une ou plusieurs pièces à ouvrer, et un système d'opération au laser (700, 1200, 2200, 2300), le système d'opération au laser comprenant :
un laser (720, 1220) ;
un ou plusieurs éléments stationnaires faisant écran (705, 1205) formant une enceinte (702, 1202, 2202, 2302) pour le laser, avec un orifice d'entrée (710, 1210, 2210, 2310) et un orifice de sortie (715, 1215, 2215, 2315), et positionnés de telle sorte qu'une pièce à ouvrer des une ou plusieurs pièces à ouvrer sur un convoyeur puisse entrer dans l'orifice d'entrée et sortir de l'orifice de sortie ;
le système étant **caractérisé par** :
**le fait que** le convoyeur est un convoyeur à moteur linéaire (20) ; et
un ou plusieurs éléments mobiles faisant écran (725, 1225, 2225, 2325) configurés pour se déplacer avec les une ou plusieurs pièces à ouvrer à mesure que, en cours d'utilisation, les pièces à ouvrer sont déplacées en mouvement continu par le convoyeur à moteur linéaire (20) jusque dans des émissions laser provenant du laser, où, en cours d'utilisation, le convoyeur à moteur linéaire synchronise le déplacement indépendant des une ou plusieurs pièces à ouvrer avec le déplacement des éléments mobiles faisant écran,
où les un ou plusieurs éléments mobiles faisant écran comprennent un embout (740, 1240) afin de fournir un contact étendu ou souple avec les éléments stationnaires faisant écran tout en permettant également un déplacement afin de réduire l'exfiltration des émissions laser provenant de l'orifice d'entrée ou de l'orifice de sortie pendant que les une ou plusieurs pièces à ouvrer se déplacent à travers l'enceinte.

2. Un système d'automatisation selon la revendication 1, où le déplacement des un ou plusieurs éléments mobiles faisant écran s'effectue sans inversion de sens.

3. Un système d'automatisation selon l'une quelconque des revendications 1 et 2, comprenant en outre une roue supportant les un ou plusieurs éléments mobiles faisant écran de telle sorte que le déplacement des un ou plusieurs éléments mobiles faisant écran s'effectue en rotation.

4. Un système d'automatisation selon l'une quelconque des revendications 1 à 3, où, en cours d'utilisation, la vitesse du déplacement des un ou plusieurs éléments mobiles faisant écran est adaptée au déplacement des une ou plusieurs pièces à ouvrer sur le convoyeur.

5. Un système d'automatisation selon l'une quelconque des revendications 1 à 4, où les un ou plusieurs éléments mobiles faisant écran comprennent deux roues, une première roue au niveau de l'orifice d'entrée et une deuxième roue au niveau de l'orifice de sortie, où les deux roues coopèrent avec l'enceinte afin de créer :
une première chambre temporaire adjacente à l'orifice d'entrée formée par la première roue ;
une deuxième chambre temporaire adjacente à l'orifice de sortie formée par la deuxième roue ; et
un espace intérieur entre les première et deuxième chambres dans lequel les émissions laser atteignent les une ou plusieurs pièces à ouvrer.

6. Un système d'automatisation selon l'une quelconque des revendications 1 à 5, où les un ou plusieurs éléments mobiles faisant écran sont configurés pour s'étendre lorsque cela est nécessaire afin de réduire l'exfiltration et pour se contracter lorsque cela n'est pas nécessaire afin de réduire l'exfiltration.

7. Un système d'automatisation selon l'une quelconque des revendications 1 à 6, où le convoyeur (20) comprend une palette, de sorte que les une ou plusieurs pièces à ouvrer sont portées par la palette, où la palette et la pièce à ouvrer entrent dans l'orifice d'entrée et sortent de l'orifice de sortie.

8. Un système d'automatisation selon l'une quelconque des revendications 1 à 7, où les un ou plusieurs éléments mobiles faisant écran sont déplacés par le convoyeur portant les une ou plusieurs pièces à ouvrer ou un élément mobile du convoyeur portant les une ou plusieurs pièces à ouvrer.

9. Un procédé (2400) pour une opération au laser dans un système d'automatisation, le système d'automatisation incluant une ou plusieurs pièces à ouvrer portées par un convoyeur à moteur linéaire, le procédé comprenant :
le déplacement d'une pièce à ouvrer vers un orifice d'entrée d'un poste d'opération au laser par l'intermédiaire du convoyeur à moteur linéaire (2405) ;
le déplacement d'au moins un élément faisant écran avec la pièce à ouvrer afin d'enfermer la pièce à ouvrer dans une première région à mesure que la pièce à ouvrer entre dans l'orifice d'entrée, où le convoyeur à moteur linéaire synchronise le déplacement de la pièce à ouvrer avec le déplacement de l'au moins un élément faisant écran (2410) ;
le déplacement de la première région avec la pièce à ouvrer de telle sorte que la première région reste fermée vis-à-vis de l'orifice d'entrée mais que la pièce à ouvrer se déplace jusque dans un espace intérieur du poste d'opération au laser, où le convoyeur à moteur linéaire synchronise le déplacement de la pièce à ouvrer avec le déplacement de la première région (2415) ;
la réalisation d'une opération au laser sur la pièce à ouvrer dans l'espace intérieur à mesure que la pièce à ouvrer se déplace en continu par l'intermédiaire du convoyeur à moteur linéaire en synchronisation avec l'opération au laser (2420) ;
le déplacement d'au moins un autre élément faisant écran avec la pièce à ouvrer afin d'enfermer la pièce à ouvrer dans une deuxième région qui est différente de la première région à mesure que la pièce à ouvrer se déplace de l'espace intérieur vers l'orifice de sortie, où le convoyeur à moteur linéaire synchronise le déplacement de la pièce à ouvrer avec le déplacement de la deuxième région (2425) ;
le déplacement de la deuxième région avec la pièce à ouvrer de telle sorte que la deuxième région reste fermée vis-à-vis de l'espace intérieur mais que la pièce à ouvrer se déplace à travers l'orifice de sortie, où le convoyeur à moteur linéaire synchronise le déplacement de la pièce à ouvrer avec le déplacement de la deuxième région (2430) ; et
le déplacement de la pièce à ouvrer hors de l'orifice de sortie, par l'intermédiaire du convoyeur à moteur linéaire (2435).

10. Un procédé d'opération au laser selon la revendication 9, où le déplacement de l'au moins un élément faisant écran et de l'au moins un autre élément faisant écran s'effectue sans inversion de sens.

11. Un procédé d'opération au laser selon l'une quelconque des revendications 9 et 10, où le déplacement de l'au moins un élément faisant écran et de l'au moins un autre élément faisant écran s'effectue en rotation.

12. Un procédé d'opération au laser selon l'une quelconque des revendications 9 à 11, où l'au moins un élément faisant écran et l'au moins un autre élément faisant écran sont configurés pour s'étendre lorsque cela est nécessaire afin de réduire l'exfiltration et pour se contracter lorsque cela n'est pas nécessaire afin de réduire l'exfiltration.

13. Un système d'automatisation selon l'une quelconque des revendications 1 à 8, comprenant en outre au moins un col de cygne entre chaque pièce à ouvrer et le convoyeur à moteur linéaire.
